# EUROPEAN PATENT APPLICATION

(11) **EP 2 757 510 A1**
(43) Date of publication of application: **23.07.2014**
(21) Application number: 14152193.0
(22) Date of filing: 22.01.2014
(51) Int. Cl.: G06Q 10/10, G06F 17/30

(54) **Method and system for linking data sources for processing composite concepts**

(30) Priority: 22.01.2013 US 201361755107 P
(71) Applicant: Maluuba Inc., Waterloo, Ontario N2L 3K8 (CA)
(72) Inventor: The designation of the inventor has not yet been filed
(74) Representative: Krebs, Achim

(57) **Abstract**

A computer-implemented method and system and computer-readable medium are disclosed for linking an ontology provided by a content service (i.e. category ontology) with a word expansion ontology (i.e. lexical ontology). A user may provide an input such as a voice command to an application. The voice command is processed by a natural language processing (NLP) engine to derive the user's intent and to extract relevant entities embodied in the command. The NLP engine may create a composite concept set containing multiple permutations of the concepts (entities extracted) and provide the composite concept set to a concept mapper. The concept mapper searches a mapping file and applies one or more scoring operations to determine a best match between the composite concept set and at least one category provided by the category ontology. The content service is searched using the category and the results are displayed to the user.

## Description

### FIELD OF THE INVENTION

The present subject matter relates generally to ontologies, and in particular, to mapping concepts from a first ontology to categories in a second ontology, the second ontology being provided by a content service.

### BACKGROUND

Ontologies are the structural frameworks for organizing information as a form of knowledge representation about the world or some part of it. Ontologies are commonly used in fields such as artificial intelligence, the Semantic Web, and knowledge management, among others.

One problem with the proliferation of ontologies (and other hierarchical relationship frameworks) is that they are often created by domain experts for a particular domain or computing application, resulting in highly specific ontologies that are not very extensible to other purposes. Another deficiency commonly experienced is that ontologies are often limited in vocabulary which may result in synonyms of words in the ontology not being classified or processed correctly by the application implementing the ontology. In short, ontologies are currently restricted to the specific words used in the ontology, meaning additional language is not supported by the ontology.

### BRIEF DESCRIPTION OF DRAWINGS

Exemplary embodiments of the subject matter will now be described in conjunction with the following drawings, by way of example only, in which:
Figure 1 is a block diagram illustrating an embodiment of a linked ontology framework as a networked natural language processing environment configured to provide functionality to users;
Figure 2 is a block diagram showing an embodiment of the intelligent services engine of Figure 1 configured to provide functionality to a user;
Figure 3 is an embodiment of a category ontology;
Figure 4 is an embodiment of a category ontology for a specific content service;
Figure 5 is an embodiment of a lexical ontology;
Figure 6 is a subset of an exemplary lexical ontology showing multiple entries for the same word;
Figure 7 illustrates an exemplary mapping relationship in a mapping file;
Figure 8 is an exemplary mapping relationship in a mapping file between a specific category ontology and lexical ontology;
Figure 9 is a flowchart showing one embodiment of operations for retrieving information from a content service based on input of a user;
Figure 10 is a block diagram showing an exemplary computing device for use in the natural language processing environment of Figure 1;
Figure 11 illustrates a Venn Diagram showing the intersection between elements of a composite concept and mapping file;
Figure 12 illustrates an embodiment of a system to map concepts to categories; and
Figure 13 is a flowchart showing one embodiment of operations for retrieving data from a content provider based on categories found by the concept mapper using natural language input from a user.

The figures depict various embodiments of the subject matter disclosed herein for purposes of illustration only. One skilled in the art will readily recognize from the following discussion that alternative embodiments of the structures and methods illustrated herein may be employed without departing from the principles described herein.

### SUMMARY

There is described herein methods, systems and computer program products for linking ontologies to perform tasks desired by users of computing devices.

In one aspect, there is provided a computer-implemented method for retrieving results for a user of a computing device. A user enters a command using a software application on a computing device such as a mobile device. The command may be a voice utterance, a text string, or a sequence of inputs entered using input devices such as the keyboard and touchscreen. The command is processed to identify the task intended by the user and to extract at least one entity associated with the task. In some aspects, the command is processed by a natural language processing engine. A first ontology is searched for concepts that match the one or more entities extracted. The first ontology may be an ontology of concepts, the concepts being organized in a hierarchical manner to indicate subsumption relationships. In this specification the first ontology may be referred to as the "lexical ontology". If a match is found in the first ontology, a relationship mapping file is searched to find the association between the selected concept and a second ontology. The second ontology may include a hierarchy of categories and subcategories. Once the category from the second ontology has been identified, the content service is instructed to retrieve results at least partly based on the identified category. The response from the content service, if relevant, may then be displayed to the user that initiated the command on the user's device.

The subject matter disclosed herein may be employed in an environment which provides specific functionality to a user, the functionality being categorized into domains. The term "domain" as used herein refers to a field of action, and a user may perform one or more tasks related to the field of action. For example, a voice-based personal assistant application on a mobile device may be configured to accomplish tasks in a business finder domain, such as locating businesses nearby that have the items that the user would like to find. In such an embodiment, a user may utter a query such as, "Where can I get some snow shovels", and the personal assistant application will attempt to find the information that the user desires. The application may process the command to determine the intention of the user and identify a content service configured to provide information that the user is looking for, namely, businesses that sell "snow shovels". In the above example query, the application may employ a natural language processing (NLP) engine to identify the intention of the user to locate business information and to extract the relevant entities required to perform the task (i.e. "snow shovels"). Once the task intended by the user and the relevant entities are extracted from the command, the application may identify a content service capable of finding the information the user desires. Popular business finder content services that may be used by the application include Yelp™, Google Places™, and Citysearch™, among many others. In some embodiments, the content service may be an internal service available on the device. The content service is generally accessible via a standard interface such as an application programming interface (API) and returns a result in a format such as XML or JSON; however, it will be appreciated that content may be provided in many formats and interfaces such as databases, RSS feeds, XML feeds, etc.

The content service will often group items by categories, meaning that certain items may be found by specifying the category of the content service in the interface call with the content service. In the context of the specification, the organization of categories in the content service is referred to as an ontology, and specifically as the "second ontology" or the "category ontology".

The categories specified by the content service to organize information are often different than the entity extracted from the user's command, given that users may use a variety of words and expressions when uttering commands. In the above example, the user has asked specifically for "snow shovels" which has been extracted as an entity by the NLP engine. Say for example that the application determines that Yelp™ is a suitable content provider; however the closest category of the content provider is "snow removal". The content provider category is important to identify because it will be used when the application calls an API method to retrieve the information.

The subject matter disclosed herein includes a mapping file of relationships between a first ontology containing lexical information and a second ontology containing category information. The first ontology may contain a list of synonyms for common words organized in a subsumption framework. An exemplary entry in the first ontology for organizing the entity requested by the user may be "snow shovels-->snow removal equipment-->outdoor equipment-->consumer good". The characters "->" may be used to indicate a subsumption relationship (i.e. "is a" or "is related to" or "is a child of") so that the above entry may be interpreted as meaning "show shovels" is related to "snow removal equipment" is related to "outdoor equipment", and so forth. In some embodiments, the hierarchies found in the first ontology generally have more depth than the hierarchy of categories in the second ontology. This occurs because a first ontology is often selected that is configured to recognize a variety of natural language synonyms that may be embodied in a user command, whereas the second ontology is configured to be easily readable and understandable by a person wishing to retrieve content from the content provider.

The subject matter disclosed herein includes a mapping file of relationships between the first ontology and second ontology, which has the effect of extending the language of the second ontology to include common words and phrases not found in the second ontology. In some embodiments, the mapping of relationships can extend the depth of the second ontology by several layers, which allows the personal assistant application to receive and process a greater vocabulary than is generally provided by the categories of the content service.

In some aspects, the first ontology (i.e. lexical ontology) may comprise a plurality of entries for the same word, with each entry for the same word describing a unique hierarchical relationship. The word may also be mapped to more than one category of the content service. To resolve the multiple possibilities of candidate concepts and categories, ranking operations may be used to select the particular mapping (i.e. concept to category) that will provide information that the user desires. The ranking operations may include scores that represent the likelihood that a particular entry is for a particular concept, where concepts can be ranked by commonness in the user's language, as well as scores that represent the process of broadening a concept by travelling up the hierarchical string in order to find a match with the categories. In some embodiments, composite concepts may be formed that include several concepts extracted as entities from the user's query. The ranking operations in this situation are configured to associate the composite concept to one particular category (or in some cases, several categories) in the category ontology.

There is provided a computer-implemented method for retrieving a result responsive to a command, the result retrieved from a content service, the content service comprising a second ontology comprising a hierarchy of at least one category and subcategories. The method comprises: receiving an input query; processing the input query to recognize a task to perform according to an intention and one or more entities determined from the input query; identifying matching concepts in a first ontology using the one or more entities, the first ontology comprising hierarchical relationships of concepts; using a mapping between the concepts of the first ontology and the at least one category of the second ontology to select a mapped category; instructing the content service to retrieve the information according to the task and the mapped category; and receiving the result from the content service.

The mapping may associate a category with each individual concept with which the category shares a lexical relationship.

The mapping may further associate categories with composite concepts, each composite concept defined by a set of individual concepts where the one or more entities match to a particular composite concept if all of the one or more entities match with the respective set of individual concepts.

Using the mapping may comprise performing scoring operations to select the mapped category. The method may comprise broadening a matched concept in accordance with the hierarchical relationship within the first ontology of the matched concept and scoring using the broadened matched concept. A particular entity may be matched to two or more individual candidate matched concepts and the mapping may select the mapped category using the two or more individual candidate matched concepts.

In some instances, a plurality of entities may be determined from the user input. The method may comprise matching each entity to at least one individual matched concept; defining a plurality of composite concepts from combinations of each of the individual matched concepts, each composite concept comprising an individual matched concept for each of the plurality of entities; broadening each composite concept in accordance with the hierarchical relationship within the first ontology of each individual matched concept in a respective composite concept to define a plurality of broadened composite concepts; scoring the composite concepts and each broadened composite concept; and selecting the mapped category in accordance with the scoring.

The first ontology may be a lexical ontology. The first ontology may consist of a larger vocabulary than the second ontology.

Processing the input query may comprise processing using a natural language processing system and the input query may comprise an audio query or text-based query derived from an audio query.

### DETAILED DESCRIPTION

### System Overview

A natural language processing (NLP) environment offers users the ability to interact with systems and applications to complete tasks by uttering natural language statements (i.e. voice commands) to computers or machines. As used herein, the term "voice command" refers to any natural language statement uttered by a user which is intended to instruct an NLP computer application to initiate a response and/or to complete a task.

Although the subject matter disclosed herein may be integrated into a variety of applications and systems involving a variety of types of computing devices as will be appreciated by one skilled in the art, examples are described with reference to an intelligent voice assistant application for use on a computing device. An embodiment implemented in the context of an NLP application is only one of many possible uses of the claimed subject matter.

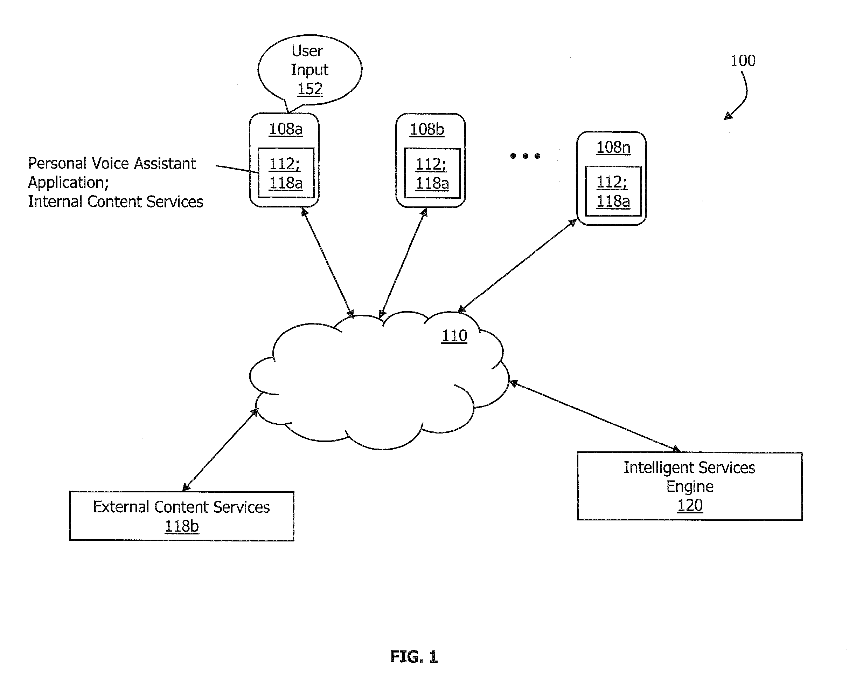

Figure 1 depicts a high level block diagram of an exemplary natural language processing system 100 that uses a linked ontology framework. The system 100 provides functionality to users of devices 108a-n so that the users may obtain information about goods and services from an intelligent services engine 120 by uttering for example voice commands (i.e. user input 152) or formulating text commands on their respective devices 108a-n. For the purposes of this specification, devices 108a-n (hereinafter referred to as device 108) may include mobile devices such as smartphones, cell phones, personal digital assistants (PDAs), tablet computers, voice assistants in automobiles, etc. as well as more stationary computing devices such as set-top boxes, personal computers, and so forth.

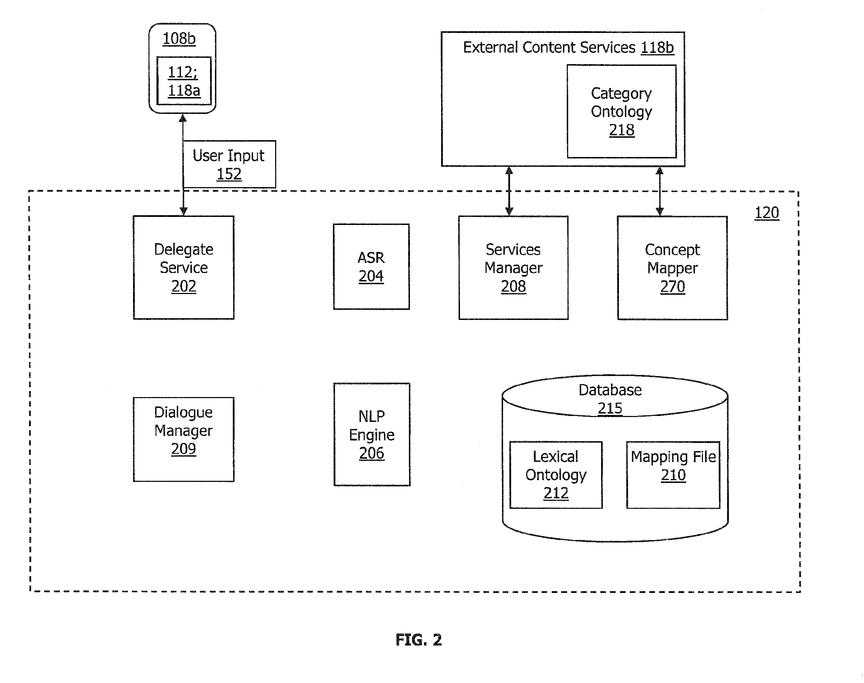

Intelligent services engine 120 (shown in more detail in Figure 2) can provide NLP functionality to a user interacting with personal voice assistant application 112 (hereinafter application 112) on device 108. The processing of the user input 152 by intelligent services engine 120 may include classifying the input into one or more domains, extracting entities from the user input 152, as well as employing one or more rules for extracting other useful information from or further processing the user input 152. In one embodiment, at least one conditional random field (CRF) is used for extracting entities from a given user input 152 (i.e. for performing named entity recognition, or NER). NER seeks to locate and classify atomic elements (i.e. entities) in text into predefined categories such as the names of persons, organizations, locations, expressions of times, quantities, monetary values, percentages, etc. The intelligent services engine 120 may also be configured to extract/identify more complex items such as an entire text message by employing semantic role labeling.

The embodiments of intelligent services engine 120 provided herein include one or more lexical ontologies 212 that include vocabulary that may be supported by the application 112. Each lexical ontology 212 may be designed to capture a wide range of vocabulary that may be uttered by the user of the application 112, which can include vocabulary that may not be supported by a category ontology 218 provided by a content service 118 or otherwise created.

A mapping file 210 (provided e.g. by database 215 of intelligent services engine 120) can be used to associate various elements from the lexical ontology 212 to various elements of the category ontology 218. A mapping file 210 can be used to extend the language that may be used to find items within the category ontology 218. The mapping file 210 may be a file implemented using one or more object oriented classes or interfaces, and as such, implementation of the mapping file 210 may occur via a variety of methods. Lexical ontology 212 and mapping file 210 may be provided by a database 215 or other store.

For example, user input 152 may take the form of an voice command: "Book a meeting with Bob at 3 p.m. at the Headquarters". In this example user input 152, a user is instructing the intelligent services engine 120 (via voice assistant application 112) to perform a specific task (i.e. book a meeting using a suitable application such as a calendar application) with specific parameters (i.e. "Bob", "3 p.m." and "the Headquarters").

The elements of the system 100 may communicate via one or more networks 110 (e.g. the Internet) so that data, components, modules, services, applications, interfaces etc. that reside on or are partly distributed on one component (such as device 108 or within intelligent services engine 120) may be accessible by the other components that reside on or are distributed on other computing devices.

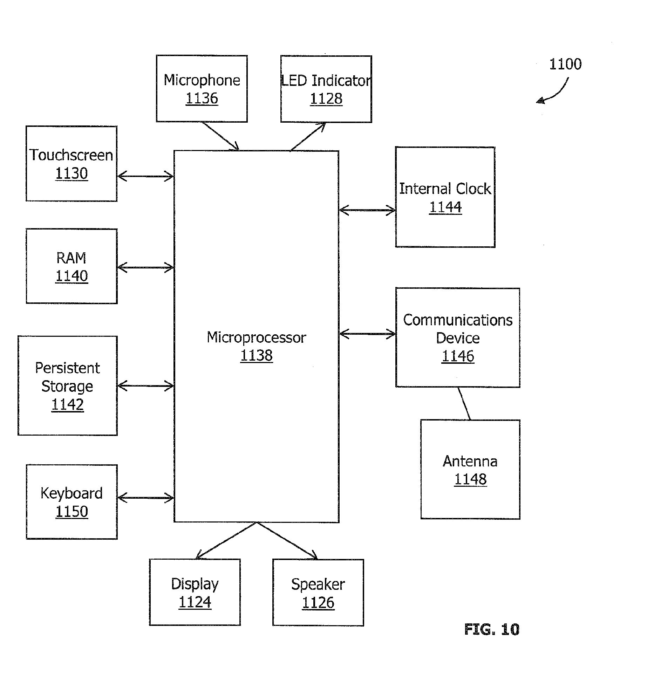

Figure 10 shows a block diagram of components of an exemplary computing device 1100. Device 1100 is representative of any computing device that may be used within a natural language processing system 100 including device 108 (e.g. smartphone), NLP hosting server (not shown), and so forth. Computing device 1100 may be based on a hand-held wireless communication device such as a smartphone with cellular service and/or Wi-Fi, a personal computer with wired and/or wireless Internet connectivity, and/or other computing devices such as personal digital assistants, tablet computers, laptop computers, set-top boxes, and so forth.

Device 1100 may be based on a microcomputer that includes a microprocessor 1138 (also referred to herein as a processor) connected to a random access memory (RAM) unit 1140 and a persistent storage device 1142 that is responsible for various non-volatile storage functions of the device 1100. Operating system software executable by the microprocessor 1138 can be stored in the persistent storage device 1142, which in various embodiments is flash memory. It will be appreciated, however, that the operating system software can be stored in other types of memory such as read-only memory (ROM). The microprocessor 1138 can receive input from various input devices including the touchscreen 1130, keyboard 1150, communications device 1146, and microphone 1136 (as well as other input devices not shown), and outputs to various output devices including the display 1124, the speaker 1126 and LED indicators 1128 (as well as other output devices not shown). The microprocessor 1138 is also connected to an internal clock 1144.

In various embodiments, the computing device 1100 is a two-way RF communication device having voice and data communication capabilities. Computing device 1100 may also include Internet communication capabilities via one or more networks such as cellular networks, satellite networks, Wi-Fi networks and so forth. Two-way RF communication is facilitated by a communications device 1146 that is used to connect to and operate with a data-only network or a complex voice and data network (for example GSM/GPRS, CDMA, EDGE, UMTS or CDMA2000 network, LTE, fourth generation technologies, etc.), via an antenna 1148. Although not shown, a battery provides power to all active elements of the computing device 1100.

The persistent storage device 1142 can also store a plurality of applications executable by the microprocessor 1138 that enable the device computing device 1100 to perform certain operations including the communication operations referred to above. Other applications software can be provided including, for example, an email application, a Web browser application, an address book application, a calendar application, a profiles application, and others. Various applications and services on computing device 1100 may provide application programming interfaces (APIs, not shown) for allowing other software modules to access the functionality and/or information available by the APIs. As will be discussed later herein, device 108 may provide an application 112 which allows a user to access functionality provided within an NLP system 100.

Though shown as a single device, computing device 1100 may comprise multiple separate components. For example, input/output devices may be coupled wirelessly to computing device 1100.

### Intelligent Services Engine 120

Figure 2 shows an embodiment of an intelligent services engine 120 with its constituent components in block diagram form. The intelligent services engine 120 can be used to facilitate voice-based functionality, and is an exemplary implementation of the linking ontology solution provided herein. By using an application 112 on device 108 (such as a smartphone), a user may utter a voice command such as "Book me a meeting for 8 am", and intelligent services engine 120 will accomplish the task (i.e. book the meeting with the parameters specified by the user). A delegate service 202 may be provided to route user input 152 received from devices 108, manage communication between components (e.g. Automatic Speech Recognition (ASR) module 204, services manager 208, NLP engine 206, dialogue manager 209, etc.), to access the database 215, and to direct output to the device 108 that requested a particular task. Delegate service 202 may include one or more load balancers to horizontally scale the delegate service 202 (in a service oriented infrastructure manner) according to demand by devices 108. Other components of the intelligent services engine 120 (e.g. ASR 204, NLP engine 206, services manger 208, and dialogue manager 209) may also include one or more load balancers to manage computing resources according to the demands on intelligent services engine 120 (in a service oriented infrastructure manner).

In one embodiment, user input 152 is a voice command received by delegate service 202 as a raw audio file from device 108 executing a personal voice assistant application 112. Delegate service 202 directs the file to ASR module 204 which is configured to convert the raw audio file into a text string that represents the user input 152 uttered by the user. The text string output from ASR module 204 can be provided to the NLP engine 206 which is configured to recognize the intention of the user from the text string representing the user input 152 as well as to perform NER on the text output. NLP engine 206 may apply one or more statistical models (not shown) stored electronically in database 215 and/or in another electronic manner. In one embodiment, each domain has one or more statistical models that are specifically trained for the particular domain using labeled training data. NLP engine 206 classifies the user input 152 into a domain/task pair, and then performs entity extraction on the user input 152 to extract the parameters required to perform the command intended by the user. In some embodiments, each domain of functionality (e.g. calendars, reminders, news, sports, etc.) has at least one statistical model for classification and at least one statistical model for entity extraction. The classification models are used to determine which domain and task are referred to in the user input 152 (for example, the calendar domain and an "add meeting" task). The entity extraction models are used to extract entities necessary to perform the command: for example, date/time, location, attendees, and so forth.

Once NLP engine 206 has determined the domain/task pair from the user input 152 and has extracted the relevant entities, the results can be stored in a data structure (e.g. template object) and provided to a services manager 208. The services manager 208 can be configured to identify an internal content service 118a or external content service 118b for performing the command (i.e. user input 152) intended by the user and to instruct the appropriate content service 118 to perform the intended command via a predefined interface such as an API. Internal content services 118a are those services available on a device 108 made available by the operating system or otherwise available on the device 108. Examples of internal content services 118a available via an application programming interface (API) are calendar, email, text messaging, phone services, and so forth. Examples of external content services 118b (i.e. services provided by third parties via an Internet connection (e.g. via network 110 and accessible by an interface such as an API) are services related to stocks, news, weather, knowledge, and so forth.

The content service(s) 118 that are called by services manager 208 can be configured to return results (e.g. to the services manager 208) in known formats such as XML, JSON, etc. which can then be passed to a dialogue manager 209 for formatting. The dialogue manager 209 may also access predefined dialogue from a repository (such as a dialogue database) for presentation with the results to the user on the device 108. The formatted results screen (with dialogue (e.g. for audio output) if applicable) can then be communicated by the delegate service 202 to the device 108 that made the request. Some responses may only comprise dialogue (e.g. for audio output). Application 112 on the mobile device 108 can be configured to format and present the result from delegate service 202 according to the capabilities and settings of the device 108.

### Lexical Ontology 212

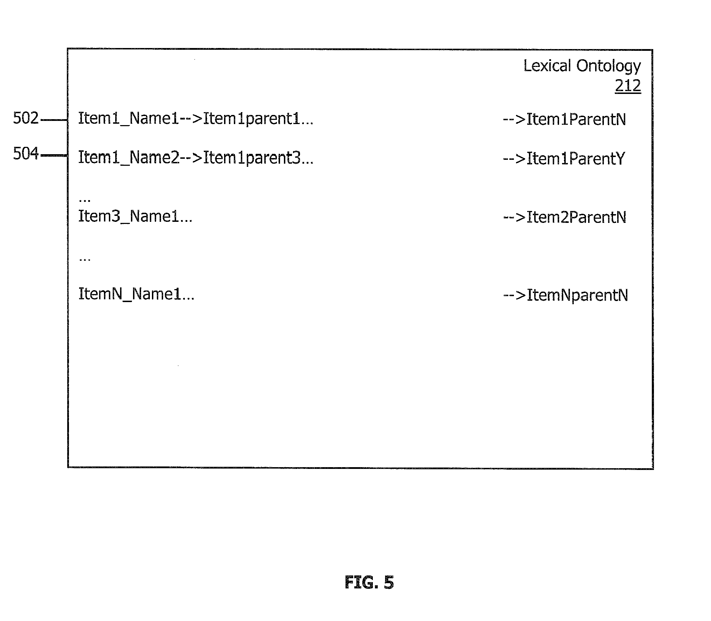

Figure 5 illustrates an exemplary lexical ontology 212. Lexical ontology 212 can include a plurality of concepts, a concept being an unambiguous real world idea. For example, the physical item "skate" is a concept that may be used in a command uttered by a user such as "Where can I get a skate?" A concept may be represented by one or more entries in a lexical ontology, for example:
skate-->sports equipment-->equipment-->instrumentality-->artifact-->whole->object-->physical entity-->entity

The verb "to skate" as in "Where can I skate?" may also be a concept, for example:
skate-->glide-->travel

Each concept entry shown in Figure 5 begins with a child concept and ends with a parent concept. For example, entry 502 begins with a child concept "Item1_Name1" which may represent a word such as "skate" and ends with "Item 1ParentN" which may represent a word such as "entity". The entry 502 may include other parents of "Item1" organized in a hierarchy such that "Item1" represents the narrowest concept, and each parent to the right indicated by the character "-->" represents a broader concept with "Item1ParentN" being the broadest concept in the entry 502. Entry 504 also has "Item1" as the narrowest concept, but the hierarchy described by entry 504 is different from that of entry 502. Several entries may begin with the same word; however, no two entries are identical. Different entries may also begin with different words that are synonyms of each other, for example, "skate" and "ice skate"

The lexical ontology 212 may be employed in an application offering functionality to users, such as a mobile application 112 that is in communication with an intelligent services engine 120 and one or more external content services 118b. Lexical ontology 212 may be used to expand the vocabulary/lexicon of a voice-based system beyond what is available in a category ontology 218, as will be described in more detail herein. As an example, category ontology 218 may have a category called "grocery" which may be used as a parameter by intelligent services engine 120 when making an API call to a content service 118 to retrieve nearby grocery businesses. A user, however, may express a variety of terms in user input 152 that may be found at a grocery store such as "food", "fruit", "meat", "steak", "milk", etc. The linking ontology solution disclosed herein allows a user to express a wide array of words in user input 152 and still access the functionality provided by content service 118 even though the content service 118 provides a much more narrow set of categories.

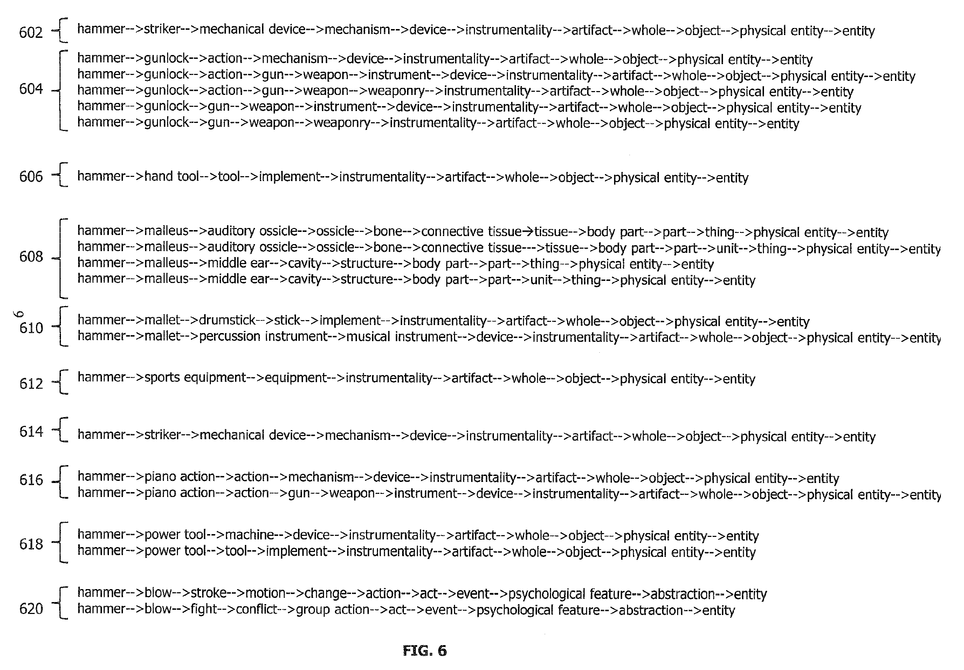

Lexical ontology 212 includes a plurality of entries that describe child-parent relationships from a bottom-level entity (at the far left of the entry) to the top-level entity (at the far right of the entry). Each element in an entry is a child (i.e. is in a subsumption relationship) to every other element to the right within the same entry. The format of the file containing the lexical ontology 212 shown in Figures 5 and 6 is merely exemplary, as the lexical ontology 212 may be arranged from left to right, right to left, top to bottom and vice versa, or in any other suitable format that indicates a hierarchical (or other) relationship. In one embodiment, each entry is not necessarily a child of each element to the right, but rather may be generally related to the other elements within the same entry.

Lexical ontology 212 may be an ontology chosen or generated for a specific domain of functionality (e.g. stock trading functionality) or may be a general lexical ontology containing a substantial portion of a human language such as English. WorldNet™ is an example ontology that supports a large portion of the English language that may be used as a general lexical ontology 212 for some implementations.

In some embodiments, the lexical ontology 212 may include multiple entries beginning with the same word. Take the example of the word "hammer", which can have many meanings and may be a verb or a noun. In a noun sense, the word hammer may refer to a tool for hitting nails, a part of a firearm, a device used to strike a bell, a device to be thrown in track and field, and so forth. When such a lexical ontology 212 is used by an application 112, the application 112 may need to disambiguate between entries having the same root word, as will be discussed further herein.

A subset of an example lexical ontology 212 is shown in Figure 6 for the word "hammer". In practice, the lexical ontology 212 may contain entries for numerous nouns, however for the sake of this description; only entries for the word "hammer" are shown. The noun groups 602,604,606,608,610,612,614,616,618,620 all have the word "hammer" as the child of each entry within the group, but the hierarchical relationships of each entry are different as one looks up the chain from the root word "hammer" to the final word at the far right of each entry. For example, in entry 602 "hammer" is a direct child of "striker" which is a child of "mechanical device". In entry 604, however, "hammer" is a direct child of "gunlock" which is a child of "action".

As mentioned herein, lexical ontology 212 may be used to capture a large portion of the language expected to be included in user input 152 provided to a given application 112 but not supported by a category ontology 218. A mapping file 210 may be provided so that user input 152 may include any word in the lexical ontology 212 and still obtain the functionality provided by content service 118, as is further described below.

### Category Ontology 218

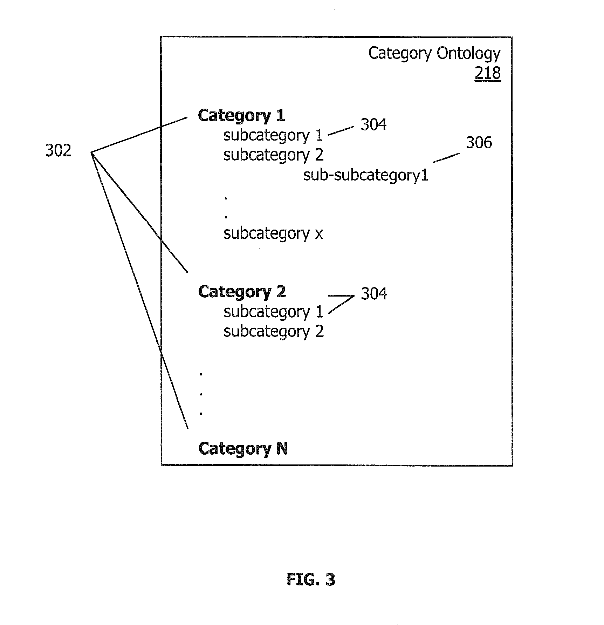

Reference is next made to Figure 3 in which a category ontology 218 is shown according to one embodiment. Category ontology 218 includes a plurality of parent categories 302, some of which have child categories 304, and sub-child categories 306 which may have additional sub-child categories. Other exemplary category ontologies 218 may have more or less hierarchical levels than is shown in Figure 3. A category ontology 218 is often created by a content service 118 so that users or applications 112 may restrict the information provided by the content service 118. Each category 302,304,306 generally has a tag name that may be used as a parameter to one or more calls to the content service 118 (e.g. by the services manager 208) in order to restrict the information returned back by the content service 118.

The category ontology 218 is used by a content service 118 to organize information so that third parties (such as intelligent services engine 120) are able to retrieve information from the content service 118 in an organized fashion. In general, each entry in category ontology 218 has a name or tag which is used to restrict information that is returned when application 112 retrieves information from content service 118 using an API of the content service 118.

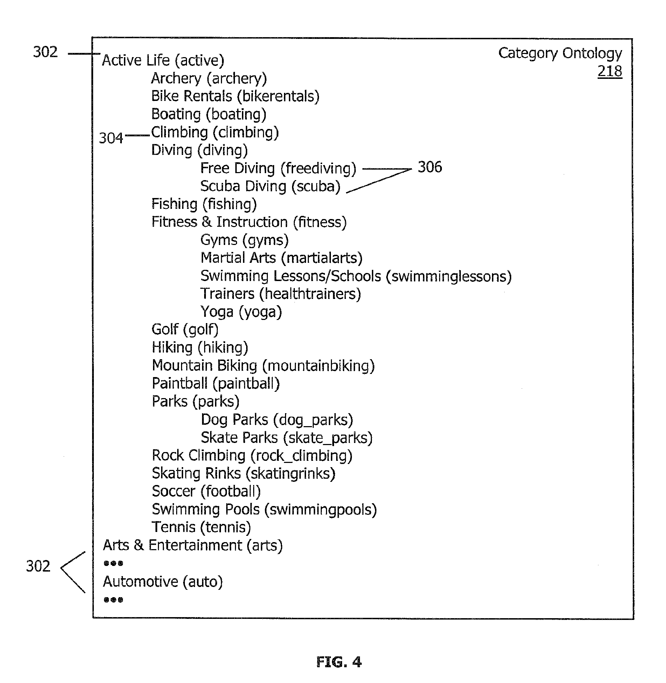

Part of an exemplary real-world category ontology 218 is illustrated in Figure 4 which may be used by an exemplary application 112. In this example, application 112 is configured to find business information (and perhaps other information as well) for users of a device 108. A user may utter a voice command (i.e. user input 152) such as "I'm looking to buy a hammer nearby" to application 112 which uses NLP engine 206 to process the user input 152 to determine the intention of the user as well as any entities that may be useful in accomplishing the task intended by the user. Category ontology 218 includes top-level categories 302 such as "Active Life", "Arts & Entertainment" and "Automotive" as well as several subcategories 304 (e.g. "Bike Rentals", "Fishing", "Skating Rinks", etc.) that belong to the top-level category 302 "Active Life". Some subcategories 304 also contain their own sub-subcategories 306 (e.g. "Diving" contains "Free Diving" and "Scuba Diving"). Any number of hierarchical levels may be used in category ontology 218 depending on a particular implementation. For practical reasons, however, category ontology 218 is generally not as complex as lexical ontology 212 (in both number of levels and number of entries) because category ontology 218 is designed to be used by a human being (such as a programmer or user) and the number of categories 302 is meant to be manageable. The parameter name of each category 302 that may be used as a parameter in a particular API call is shown in parentheses in Figure 4 beside its associated category 302.

Continuing with the example user input 152 "I'm looking to buy a hammer nearby", even if the application 112 correctly derives the intention of the user as finding businesses and extracts the entity "hammer", the category ontology 218 does not have a category 302 with the name "hammer". A human being can quickly discern that a hammer can likely be found at businesses retrieved using the category 302 "Home Services", and subcategory 304 "Handyman" (not shown). Application 112 implements a lexical ontology 212 and a mapping file 210 to link many thousands of natural language words that may be uttered to a comparatively simple category ontology 218. The subject matter disclosed herein substantially enhances the language of category ontology 218 by first applying user input 152 to a lexical ontology 212 and then mapping a particular entry using a mapping file 210 from lexical ontology 212 to a particular category 302 from category ontology 218.

### Mapping file 210

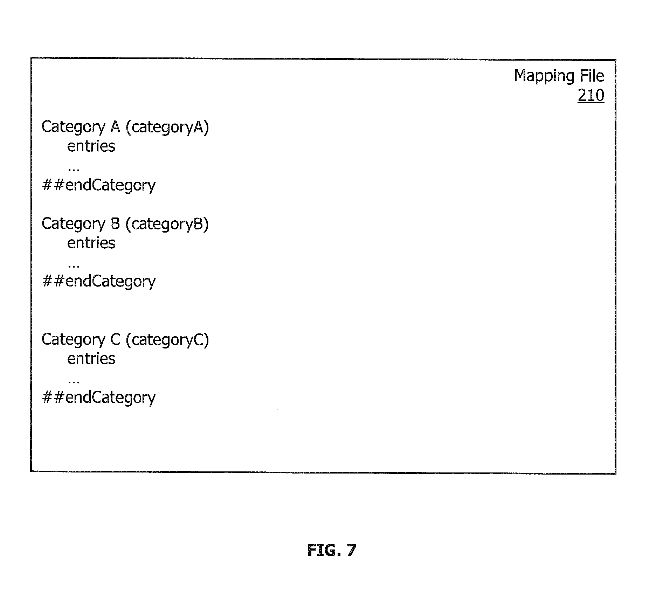

Referring next to Figure 7, an exemplary mapping file 210 is illustrated. The mapping file 210 is a mapping of concepts from the lexical ontology 212 to categories 302 in the category ontology 218. In general, the mapping file 210 links parent level concepts (instead of bottom-level concepts) from lexical ontology 212 to categories 302 from category ontology 218, allowing user input 152 to be provided to application 112 with a far greater vocabulary than what is available in category ontology 218. By linking parents of concepts from lexical ontology 212 the mapping file 210 is substantially smaller in size than lexical ontology 212. The mapping file 210 may be created programmatically, by a human being, or through a combination of human interaction and computer processing.

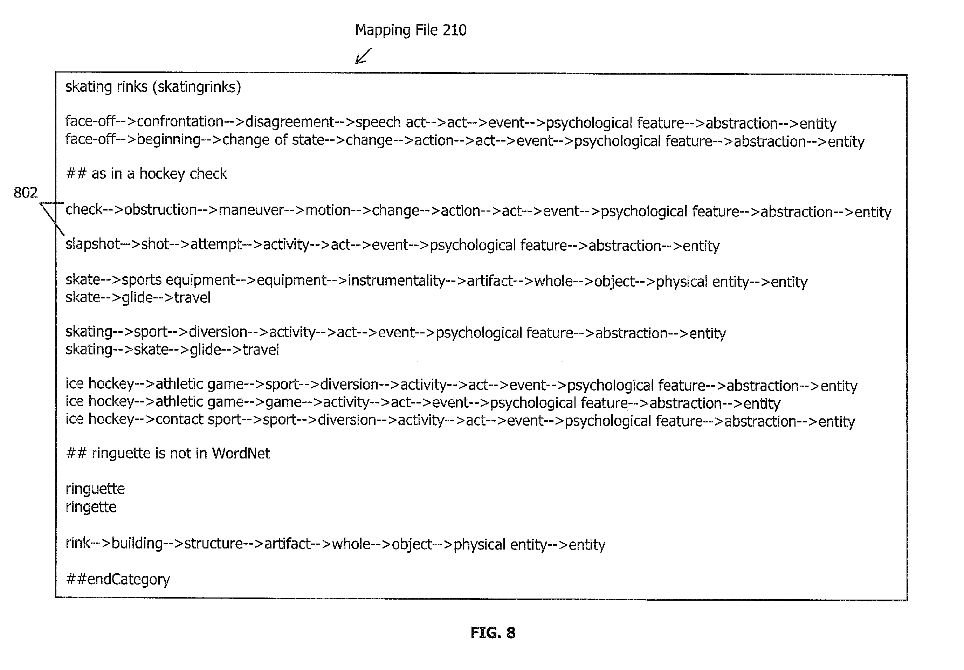

Figure 8 illustrates an exemplary mapping file 210 for the category 302 "skating rinks" having the parameter name of "skatingrinks". The category map begins with the title (i.e. "skating rinks") and ends with a predetermined character sequence, in this case "##endCategory". The bottom-level concepts 802 (i.e. "face-off", "check", "slapshot", etc.) all map to the category "skating rinks", meaning that in one embodiment, all extracted entities that are identical to the bottom-level entries 802 or are children of entries 802 will map to the category "skating rinks" in a relevant content service 118. The concept mapper 270 may receive one or more entities from NLP engine 206, and retrieve the most relevant category 302 (according to scoring operations described below) by performing word expansion on the entities by referencing the lexical ontology 212, and mapping the concepts from the lexical ontology 212 to category ontology 218 using the mapping file 210.

### Flow of Operations

Continuing with the example user input 152 "I'm looking to buy a hammer nearby" that is uttered (e.g. via a microphone 1136) by a user to application 112 running on device 108. Application 112 can process the user input 152 and send the raw audio file to NLP engine 206 which derives the intention of the user and extracts any relevant entities. The intention of the user expressed in the user input 152 is to find businesses close to the user's location that sell a "hammer". NLP engine 206 may store the derived intention and entities in a data structure such as a template and direct the template to services manager 208 which is configured to interface with the appropriate content service 118 configured to find information for which the user is looking. Services manager 208 can be configured to identify an appropriate content service 118 which can accomplish the result desired by the user, and services manager 208 can determine if calling the content service 118 requires ontological mapping with a mapping file 210. If the content service 118 requires ontological mapping, then services manager 208 can retrieve the lexical ontology 212, category ontology 218, and mapping file 210 from memory (e.g. non-volatile memory, database 215, RAM 1140, etc.). The mapping file 210 may be implemented by a mapping service (or software library) that provides a variety of methods for mapping concepts to categories. In one embodiment, the mapping library includes a method to get a category 302 (such as getCategory()) based on one or more parameters that embody the entities extracted by NLP Engine 206. The method getCategory() (the name being exemplary) may take one or more entities extracted by NLP engine 206 as parameters and may return the category 302 that best matches the entities extracted from the user input 152.

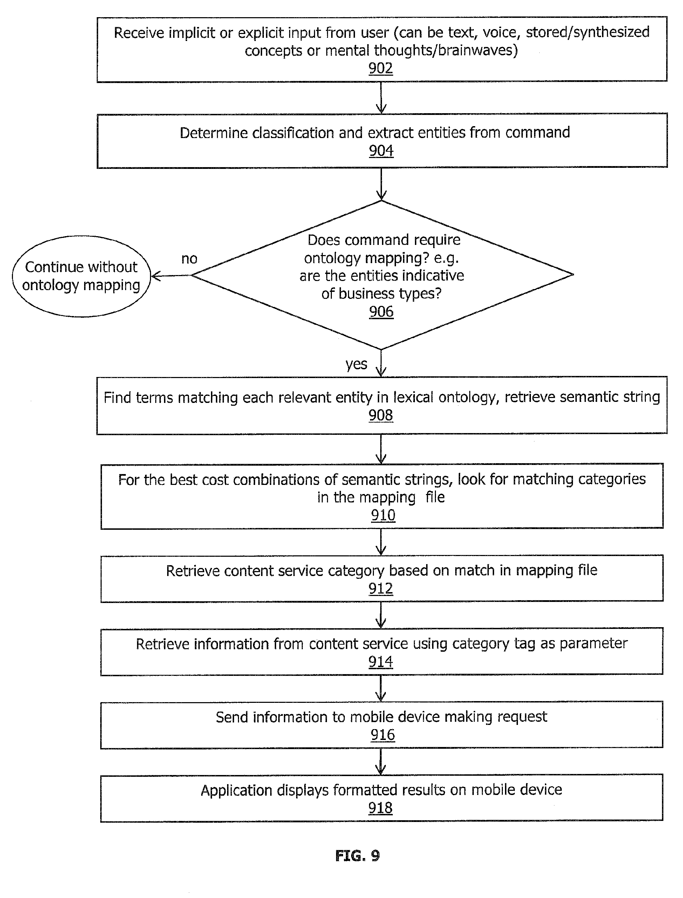

Referring to Figure 9, at step 902 implicit or explicit user input 152 is received, an example of which is a voice command. At step 904, NLP engine 206 classifies the user input 152 into a domain and extracts the relevant entities (the process may include semantic role labeling). At step 906, a decision is made as to whether the classification (i.e. the specific content services 118) requires ontological mapping, and if so, processing continues to step 908, where the lexical ontology 212 is searched to find any concepts that match the extracted entities. At step 910, for the best combination of semantic strings, matching categories 302 are searched for within the mapping file 210. This step may involve one or more scoring operations to determine which category 302 is the optimal match according to the scoring operations. At step 912, the content service 118 is searched to retrieve the category 302 that matches the category identified in the mapping file 210 at step 910. At step 914, the category tag of the category 302 identified at step 912 is used as a parameter to retrieve information from the content service 118. At step 916, the results from the content service 118 are sent to the device 108 (e.g. by the delegate service 202), and at step 918, application 112 displays the formatted results to the user on the device 108.

### Categories 302

As mentioned above, a category 302 has the user friendly label and the identifier used by an API (e.g. external content service 118). A category 302 may represent one or more real-world items or groups of items. For example, a particular category 302 may be "jazz" with an identifier in parentheses of (jazz) to indicate that the identifier may be used as a parameter in an API call. An example category 302 representing a group of related items is "jazz and blues" (jazzandblues).

### Aggregate Concept

An aggregate concept is a placeholder for multiple concepts. An aggregate concept has an unambiguous name/label. An aggregate concept may be used to facilitate the creation of a mapping file 210. Aggregate concepts are not necessary, however, they save space in the mapping file 210 and time for adding concepts and composite concepts to a mapping file 210.

For example, the aggregate concept "buy" may be represented as follows:
aggregate:buy
purchase-->acquisition-->acquiring-->act-->event-->psychological feature-->abstraction-->entity
sell-->...
transfer->...
##endAggregate

### Mapping Concepts to Categories

A concept mapping (e.g. in a mapping file 210) shows a category 302 and all concepts that map to that category 302 followed by a functional comment "##endCategory" to indicate that the category is finished. Comments are indicated by the string ##. For example,
skating rinks (skatingrinks)
face-off-->confrontation-->disagreement-->speech act --> act-->event--> psychological feature-->abstraction-->entity
face-off-->beginning-->change of state-->change-->action-->act-->event--> psychological feature-->abstraction-->entity
## as in a hockey check
check-->obstruction-->maneuver-->motion-->change-->action-->act-->event--> psychological feature-->abstraction-->entity
slapshot-->shot-->attempt-->activity-->act-->event-->psychological feature --> abstraction-->entity
skate-->sports equipment-->equipment-->instrumentality-->artifact-->whole--> object->physical entity-->entity
skate-->glide-->travel
skating-->sport-->diversion-->activity-->act-->event-->psychological feature--> abstraction-->entity
skating-->skate-->glide-->travel
ice hockey-->athletic game-->sport-->diversion-->activity-->act-->event--> psychological feature-->abstraction-->entity
ice hockey-->athletic game-->game-->activity-->act-->event-->psychological feature->abstraction-->entity
ice hockey-->contact sport-->sport-->diversion-->activity-->act-->event--> psychological feature-->abstraction-->entity
## ringuette is not in the lexical ontology so it may be added here by a domain expert with no parent relationships in case a user utters the word
ringuette
ringette
rink-->building-->structure-->artifact-->whole-->object-->physical entity-->entity
##endCategory

Note that words not found in the lexical ontology 212 (e.g. ringuette, ringette) may be added by a domain expert to capture vocabulary that may be provided in user input 152 but is unsupported by the lexical ontology 212. This allows localized vocabulary, slang, idioms, etc. to be uttered by a user which will be mapped to a particular category 302 of the content service 118 as described herein.

### Multiple Categories

A concept can map to multiple categories 302. In some content services 118, an "OR" query may be allowable in particular API methods. As such, the mapping file 210 may have:
art galleries (galleries)
arts-->humanistic discipline-->discipline-->knowledge domain-->content--> cognition->psychological feature-->abstraction-->entity
art-->creation-->artifact-->whole-->object-->physical entity-->entity
art-->creation-->activity-->act-->event-->psychological feature-->abstraction--> entity
art-->superior skill-->ability-->cognition-->psychological feature-->abstraction--> entity
artwork-->visual communication-->communication-->abstraction-->entity
artwork-->publication-->work-->product-->creation-->artifact-->whole-->object--> physical entity-->entity
##endCategory
arts & crafts (artsandcrafts)
arts-->humanistic discipline-->discipline-->knowledge domain-->content--> cognition->psychological feature-->abstraction-->entity
art-->creation-->artifact-->whole-->object-->physical entity-->entity
art-->creation-->activity-->act-->event-->psychological feature-->abstraction--> entity
art-->superior skill-->ability-->cognition-->psychological feature-->abstraction--> entity
artwork-->visual communication-->communication-->abstraction-->entity
artwork-->publication-->work-->product-->creation-->artifact-->whole-->object--> physical entity-->entity

### Composite Concept

A composite concept is an unordered set of concepts and/or aggregate concepts. For example, a composite concept of N concepts may be represented as follows:
{concept1, concept2,..., conceptN}

For example, a possible composite concept for the terms "food" and "toiletry" can be made of the concept:
food-->solid-->matter-->physical entity-->entity
and the concept:
toiletry-->instrumentality-->artifact-->whole-->object-->physical entity-->entity to yield the following composite concept:
{food-->solid-->matter-->physical entity-->entity, toiletry-->instrumentality--> artifact->whole-->object-->physical entity-->entity}

An example using an aggregate concept could be as follows:
{juvenile-->person-->causal agent-->physical entity-->entity, aggregate:clothing}

### Aggregate Concept in a Composite Concept Example

An aggregate concept means that every concept and composite concept in the aggregate concept should be used to make new composite concepts. For example, if an aggregate concept file has:
aggregate:clothing
fashion-->vogue-->taste-->discrimination-->basic cognitive process-->process--> cognition-->psychological feature-->abstraction-->entity
wear-->clothing-->consumer goods-->commodity-->artifact-->whole-->object--> physical entity-->entity
##endAggregate
and if the concept mapping file has:
children's clothing (childcloth)
{juvenile-->person-->organism-->living thing-->whole-->object-->physical entity-->entity, aggregate:clothing}
this means that the concept mapping of children's clothing (childcloth) actually has:
{juvenile-->person-->causal agent-->physical entity-->entity, fashion-->vogue--> taste->discrimination-->basic cognitive process-->process-->cognition--> psychological feature-->abstraction-->entity}
{juvenile-->person-->causal agent-->physical entity-->entity, wear-->clothing--> consumer goods-->commodity-->artifact-->whole-->object-->physical entity--> entity}

### Composite Concepts in the Mapping file 210

A category 302 can have a composite concept as well as standalone concepts. This means that if the entities extracted from user input 152 represent narrower terms of all of the concepts in a composite concept then the entities match the category 302 of the composite concept.

For example, if the mapping file 210 has:
grocery (grocery)
{food-->solid-->matter-->physical entity-->entity, toiletry-->instrumentality--> artifact->whole-->object-->physical entity-->entity}
and the user input 152 was: "Where can I get an apple, a toothbrush, and a steak", then the NLP engine 206 may have extracted the following entities:
(BUSINESSTYPE, apple), (BUSINESSTYPE, toothbrush), (BUSINESSTYPE, steak)
where the label BUSINESSTYPE may be a label that refers to the type of entity extracted.

In such a case NLP engine 206 may provide the following string to services manager 208 to perform ontological mapping to the categories 302 provided by content service 118:
(BUSINESSTYPE, apple-->edible fruit-->produce-->food-->solid-->matter--> physical entity->entity|||...),
(BUSINESSTYPE, toothbrush-->toiletry-->instrumentality-->artifact-->whole--> object->physical entity-->entity|||...),
(BUSINESSTYPE, steak-->cut-->meat-->food-->solid-->matter-->physical entity->entity|||...)

The string "..." indicates that the composite concept for {apple, toothbrush, steak} contains several entries from lexical ontology 212 for each of apple, toothbrush and steak. The above composite concept may then be mapped to "grocery", using the scoring example described herein as applied by the concept mapper 270.

### Broadening a composite concept

If the composite concept provided is:

```
 {
 apple-->edible fruit-->produce-->food-->solid-->matter-->physical entity-->entity,
 toothbrush-->toiletry-->instrumentality-->artifact-->whole-->object-->physical entity--
 >entity,
 steak-->cut-->meat-->food-->solid-->matter-->physical entity-->entity
 }
```

then we can broaden it by making composite concepts from it by alternating which concept is broadened.

For example, going broader on apple-->...:

```
 {
 edible fruit-->produce-->food-->solid-->matter-->physical entity-->entity,
 toothbrush-->toiletry-->instrumentality-->artifact-->whole-->object-->physical entity--
 >entity,
 steak-->cut-->meat-->food-->solid-->matter-->physical entity-->entity
 }
```

In another example, going broader on toothbrush-->...:

```
 {
 apple-->edible fruit-->produce-->food-->solid-->matter-->physical entity-->entity,
 toiletry-->instrumentality-->artifact-->whole-->object-->physical entity-->entity,
 steak-->cut-->meat-->food-->solid-->matter-->physical entity-->entity
 }
```

In a further example, going broader on steak-->...:

```
 {
 apple-->edible fruit-->produce-->food-->solid-->matter-->physical entity-->entity,
 toothbrush-->toiletry-->instrumentality-->artifact-->whole-->object-->physical entity--
 >entity,
 cut-->meat-->food-->solid-->matter-->physical entity-->entity
 }
```

Normally, this yields x results, where x is the number of unique concepts composing a composite concept. However, if one of the concepts cannot be broadened, then we return one less result. For example, if the original composite concept is:

```
 {
 apple-->edible fruit-->produce-->food-->solid-->matter-->physical entity-->entity,
 entity
 }
```

then the concept mapper 270 may only return:

```
 {
 edible fruit-->produce-->food-->solid-->matter-->physical entity-->entity,
 entity
 }
```

because it is not possible to go broader on "entity".

### Scoring Composite Concepts

Composite concepts may be scored based on how "far" they are believed to be away from intent expressed in the user input 152. In one embodiment a low score more closely matches the user's intent, hence scoring becomes a minimization operation. A Scorer is used for calculating the cost or weight associated with a composite concept. Scorers may follow a scoring interface. By default, the concept map (e.g. in a mapping file 210) may use a specific class in the scoring package. For example, when NLP engine 206 returns the following to services manager 208:
(BUSINESSTYPE, apple-->edible fruit-->produce-->food-->solid-->matter-->physical entity-->entity|||
apple-->edible fruit-->fruit-->reproductive structure-->plant organ-->plant part--> natural object-->whole-->object-->physical entity-->entity|||...),
(BUSINESSTYPE, toothbrush-->toiletry-->instrumentality-->artifact-->whole--> object->physical entity-->entity|||...),
(BUSINESSTYPE, steak-->cut-->meat-->food-->solid-->matter-->physical entity->entity|||...)
then the user's input is converted to a Collection<Collection<String>>. Which may be passed to the map in the mapping file 210 as:

```
 [
 ["apple-->edible fruit-->produce-->food-->solid-->matter-->physical entity--> entity",
 "apple-->edible fruit-->fruit-->reproductive structure-->plant organ-->plant part-->natural
 object-->whole-->object-->physical entity-->entity",
 ...],
 ["toothbrush-->toiletry-->instrumentality-->artifact-->whole-->object-->physical entity--
 >entity", ...],
 ["steak-->cut-->meat-->food-->solid-->matter-->physical entity-->entity", ...],
 ]
```

In one embodiment, two scores may be calculated to determine which concept (or in this example, composite concept) is most likely to represent what the user intends to find, as expressed in the user input 152. The mapping get function may make assumptions about the cost of certain operations on composite concepts. For example, it may be assumed that the cost strictly increases when broadening and does not decrease when taking the next candidate for a term.

### Cost For Using Next Candidate Concept

In one embodiment, the get function assumes that this cost is greater than or equal to zero. Using a broader concept costs more than using the next candidate in a Collection<Concept> because the user mentioned a specific term; if they meant something broader, they should have said the broader term. The Scorer is asked to what degree the order of the concepts within one inner list matters. For example, when considering possible composite concepts to look up in the mapping file 210, the get function asks the Scorer how much cost should be associated when using the second apple,
apple-->edible fruit-->fruit-->reproductive structure-->plant organ-->plant part--> natural object-->whole-->object-->physical entity-->entity
instead of the first one,
apple-->edible fruit-->produce-->food-->solid-->matter-->physical entity-->entity

### Cost For Using One Broader Concept In a Composite Concept

The get function assumes that this cost is strictly greater than zero. Using a broader concept should cost more than using the next candidate in a collection of concepts because the user mentioned a specific term: if they meant something broader, they should have said the broader term. Each of those new composite concepts will have a score associated with it that is calculated using the score for their origin and the cost that the Scorer says it would take to make the broader version of the composite concept. For example, if we have the composite concept:

```
 {
 apple-->edible fruit-->produce-->food-->solid-->matter-->physical entity-->entity,
 toothbrush-->toiletry-->instrumentality-->artifact-->whole-->object-->physical entity--
 >entity,
 steak-->cut-->meat-->food-->solid-->matter-->physical entity-->entity
 }
```

with score: zero, then different composite concepts can be made from it by alternating which concept is broadened.

For example, the following composite concept would result from going broader on apple-->...:

```
 {
 edible fruit-->produce-->food-->solid-->matter-->physical entity-->entity,
 toothbrush-->toiletry-->instrumentality-->artifact-->whole-->object-->physical entity--
 >entity,
 steak-->cut-->meat-->food-->solid-->matter-->physical entity-->entity
 }
```

A score can be calculated using: the score of the more narrow composite concept from above (0) and the cost according to the Scorer for using one broader concept in a composite concept.

The following composite concept would result from going broader on toothbrush-->...:

```
 {
 apple-->edible fruit-->produce-->food-->solid-->matter-->physical entity-->entity,
 toiletry-->instrumentality-->artifact-->whole-->object-->physical entity-->entity,
 steak-->cut-->meat-->food-->solid-->matter-->physical entity-->entity
 }
```

A score can be calculated using: the score of more narrow composite concept from above (0) and the cost according to the Scorer for using one broader concept in a composite concept.

The following composite concept would be produced from going broader on steak-->...

```
 {
 apple-->edible fruit-->produce-->food-->solid-->matter-->physical entity-->entity,
 toothbrush-->toiletry-->instrumentality-->artifact-->whole-->object-->physical entity--
 >entity,
 cut-->meat-->food-->solid-->matter-->physical entity-->entity
 }
```

A score can be calculated using: the score of more narrow composite concept from above (0) and the cost according to the Scorer for using one broader concept in a composite concept.

In one embodiment, the mapping implementation adds the original score with the cost for using one broader concept in a composite concept. However, other metrics can be used, such as the Harmonic Mean or the average. As would be familiar to a person skilled in the art, with the Harmonic Mean, the original composite concept should not be assigned a score of 0.

In certain embodiments, a set of concepts may be penalized. In a mind reading application, for example, noise can be filtered out by adding cost/weight to concepts narrower than other concepts. For example, a person may be craving a pizza, but since people also think about sex a lot, weight/cost can be added to concepts narrower than "sexual activity". Also, if someone mentions a very obscure concept, it may deserve a lower cost. For example, if user input 152 includes "basket weaving" and "pizza", there would be less of a penalty for going broader and taking different candidates of "basket weaving" because it is such an obscure concept that if it is included in user input 152, then it is probably very important to the user. Obscure concepts may be identified by how often they are searched for by an aggregation of users, how common the concept is in a natural language such as English, using a variety of these two measures, and other ways.

### Full Scoring Example - Three Concepts Mapping to a Category

Assume that the input (as provided by NLP engine 206 after searching the lexical ontology) to the mapping file's 210 get function is:

```
 [
 [apple-->edible fruit-->produce-->food-->solid-->matter-->physical entity-->entity, apple-
 ->edible fruit-->fruit-->reproductive structure-->plant organ-->plant part--> natural
 object-->whole-->object-->physical entity-->entity],
 [toothbrush-->brush-->implement-->instrumentality-->artifact-->whole-->object-->
 physical entity-->entity, toothbrush-->toiletry-->instrumentality-->artifact-->whole--
 >object-->physical entity-->entity],
 [steak-->cut-->meat-->food-->solid-->matter-->physical entity-->entity, steak--> dinner--
 >meal-->entity]
 ]
```

The following composite concepts may be made from possible combinations of each of the input lists. The cost of using each one is calculated using the metric of choosing a different candidate in one of the input lists.
({steak-->cut-->meat-->food-->solid-->matter-->physical entity-->entity, apple-->edible fruit-->produce-->food-->solid-->matter-->physical entity-->entity, toothbrush-->brush->implement-->instrumentality-->artifact-->whole-->object-->physical entity-->entity},0.0)
({apple-->edible fruit-->fruit-->reproductive structure-->plant organ-->plant part-->natural object-->whole-->object-->physical entity-->entity, steak-->cut-->meat-->food-->solid->matter-->physical entity-->entity, toothbrush-->brush-->implement-->instrumentality->artifact-->whole-->object-->physical entity-->entity},0.5)
({apple-->edible fruit-->produce-->food-->solid->matter-->physical entity-->entity, steak-->dinner-->meal-->entity, toothbrush-->brush-->implement-->instrumentality->artifact-->whole-->object-->physical entity-->entity},0.5)
({toothbrush-->toiletry-->instrumentality-->artifact-->whole-->object-->physical entity->entity, steak-->cut-->meat-->food-->solid-->matter-->physical entity-->entity, apple->edible fruit-->produce-->food-->solid-->matter-->physical entity-->entity},0.5)
({toothbrush-->toiletry-->instrumentality-->artifact-->whole-->object-->physical entity->entity, apple-->edible fruit-->produce-->food-->solid-->matter-->physical entity-->entity, steak-->dinner-->meal-->entity},1.0)
({apple-->edible fruit-->fruit-->reproductive structure-->plant organ-->plant part-->natural object-->whole-->object-->physical entity-->entity, toothbrush-->toiletry->instrumentality-->artifact-->whole-->object-->physical entity-->entity, steak-->cut->meat-->food-->solid-->matter-->physical entity-->entity},1.0)
({apple-->edible fruit-->fruit-->reproductive structure-->plant organ-->plant part-->natural object-->whole-->object-->physical entity-->entity, steak-->dinner-->meal-->entity, toothbrush-->brush-->implement-->instrumentality-->artifact-->whole-->object->physical entity-->entity},1.0)
({apple-->edible fruit-->fruit-->reproductive structure-->plant organ-->plant part-->natural object-->whole-->object-->physical entity-->entity, toothbrush-->toiletry->instrumentality-->artifact-->whole-->object-->physical entity-->entity, steak-->dinner->meal-->entity},1.5)

If none of those composite concepts can be found in the mapping file 210, then they can be broadened. The composite concept may be broadened by making new composite concepts made of the same concepts but alternating which of its concepts are broadened. The score associated with a broadened composite concept is composed of the score of the original composite concept and the cost/weight associated with going broader on one of the concepts that make up a composite concept. So by performing multiple iterations of broadening, the following may be provided by the scoring operations:
({cut-->meat-->food-->solid-->matter-->physical entity-->entity,
apple-->edible fruit-->produce-->food-->solid-->matter-->physical entity-->entity,
toothbrush-->brush-->implement-->instrumentality-->artifact-->whole-->object--> physical entity-->entity},
   1.0)
({edible fruit-->produce-->food-->solid-->matter-->physical entity-->entity,
steak-->cut-->meat-->food-->solid-->matter-->physical entity-->entity,
toothbrush-->brush-->implement-->instrumentality-->artifact-->whole-->object--> physical entity-->entity},
   1.0)
({brush-->implement-->instrumentality-->artifact-->whole-->object-->physical entity->entity,
steak-->cut-->meat-->food-->solid-->matter-->physical entity-->entity,
apple-->edible fruit-->produce-->food-->solid-->matter-->physical entity-->entity},
   1.0)
({cut-->meat-->food-->solid-->matter-->physical entity-->entity,
toothbrush-->toiletry-->instrumentality-->artifact-->whole-->object-->physical entity->entity,
apple-->edible fruit-->produce-->food-->solid-->matter-->physical entity-->entity},
   1.5)
({brush-->implement-->instrumentality-->artifact-->whole-->object-->physical entity->entity,
apple-->edible fruit-->produce-->food-->solid-->matter-->physical entity-->entity,
steak-->dinner-->meal-->entity},
   1.5)
({brush-->implement-->instrumentality-->artifact-->whole-->object-->physical entity->entity,
apple-->edible fruit-->fruit-->reproductive structure-->plant organ-->plant part--> natural object-->whole-->object-->physical entity-->entity,
steak-->cut-->meat-->food-->solid-->matter-->physical entity-->entity},
   1.5)
({edible fruit-->produce-->food-->solid-->matter-->physical entity-->entity,
toothbrush-->toiletry-->instrumentality-->artifact-->whole-->object-->physical entity->entity,
steak-->cut-->meat-->food-->solid-->matter-->physical entity-->entity},
   1.5)
({steak-->cut-->meat-->food-->solid-->matter-->physical entity-->entity,
edible fruit-->fruit-->reproductive structure-->plant organ-->plant part-->natural object->whole-->object-->physical entity-->entity,
toothbrush-->brush-->implement-->instrumentality-->artifact-->whole-->object--> physical entity-->entity},
   1.5)
({apple-->edible fruit-->produce-->food-->solid-->matter-->physical entity--> entity,
toothbrush-->brush-->implement-->instrumentality-->artifact-->whole-->object--> physical entity-->entity,
dinner-->meal-->entity},
   1.5)
({steak-->cut-->meat-->food-->solid-->matter-->physical entity-->entity,
apple-->edible fruit-->produce-->food-->solid-->matter-->physical entity-->entity,
toiletry-->instrumentality-->artifact-->whole-->object-->physical entity-->entity},
   1.5)
({edible fruit-->produce-->food-->solid-->matter-->physical entity-->entity,
steak-->dinner-->meal-->entity,
toothbrush-->brush-->implement-->instrumentality-->artifact-->whole-->object--> physical entity-->entity},
   1.5)
({apple-->edible fruit-->fruit-->reproductive structure-->plant organ-->plant part-->natural object-->whole-->object-->physical entity-->entity,
cut-->meat-->food-->solid-->matter-->physical entity-->entity,
toothbrush-->brush-->implement-->instrumentality-->artifact-->whole-->object--> physical entity-->entity},
   1.5)
({apple-->edible fruit-->produce-->food-->solid-->matter-->physical entity--> entity,
steak-->dinner-->meal-->entity,
toiletry-->instrumentality-->artifact-->whole-->object-->physical entity-->entity},
   2.0)
({toothbrush-->toiletry-->instrumentality-->artifact-->whole-->object-->physical entity->entity,
apple-->edible fruit-->produce-->food-->solid-->matter-->physical entity-->entity,
dinner-->meal-->entity},
   2.0)
({meat-->food-->solid-->matter-->physical entity-->entity,
apple-->edible fruit-->produce-->food-->solid-->matter-->physical entity-->entity,
toothbrush-->brush-->implement-->instrumentality-->artifact-->whole-->object--> physical entity-->entity},
   2.0)
({produce-->food-->solid-->matter-->physical entity-->entity,
steak-->cut-->meat-->food-->solid-->matter-->physical entity-->entity,
toothbrush-->brush-->implement-->instrumentality-->artifact-->whole-->object--> physical entity-->entity},
   2.0)
({edible fruit-->fruit-->reproductive structure-->plant organ-->plant part-->natural object->whole-->object-->physical entity-->entity,
steak-->dinner-->meal-->entity,
toothbrush-->brush-->implement-->instrumentality-->artifact-->whole-->object--> physical entity-->entity},
   2.0)
({apple-->edible fruit-->fruit-->reproductive structure-->plant organ-->plant part-->natural object-->whole-->object-->physical entity-->entity,
steak-->cut-->meat-->food-->solid-->matter-->physical entity-->entity,
toiletry-->instrumentality-->artifact-->whole-->object-->physical entity-->entity},
   2.0)
({edible fruit-->produce-->food-->solid-->matter-->physical entity-->entity,
toothbrush-->toiletry-->instrumentality-->artifact-->whole-->object-->physical entity->entity,
steak-->dinner-->meal-->entity},
   2.0)
({apple-->edible fruit-->fruit-->reproductive structure-->plant organ-->plant part-->natural object-->whole-->object-->physical entity-->entity,
cut-->meat-->food-->solid-->matter-->physical entity-->entity,
toothbrush-->toiletry-->instrumentality-->artifact-->whole-->object-->physical entity->entity},
   2.0)
({toothbrush-->toiletry-->instrumentality-->artifact-->whole-->object-->physical entity->entity,
steak-->cut-->meat-->food-->solid-->matter-->physical entity-->entity,
edible fruit-->fruit-->reproductive structure-->plant organ-->plant part-->natural object->whole-->object-->physical entity-->entity},
   2.0)
({edible fruit-->produce-->food-->solid-->matter-->physical entity-->entity,
cut-->meat-->food-->solid-->matter-->physical entity-->entity,
toothbrush-->brush-->implement-->instrumentality-->artifact-->whole-->object--> physical entity-->entity},
   2.0)
({brush-->implement-->instrumentality-->artifact-->whole-->object-->physical entity->entity,
apple-->edible fruit-->fruit-->reproductive structure-->plant organ-->plant part--> natural object-->whole-->object-->physical entity-->entity,
steak-->dinner-->meal-->entity},
   2.0)
({apple-->edible fruit-->fruit-->reproductive structure-->plant organ-->plant part-->natural object-->whole-->object-->physical entity-->entity,
toothbrush-->brush-->implement-->instrumentality-->artifact-->whole-->object--> physical entity-->entity,
dinner-->meal-->entity},
   2.0)
({brush-->implement-->instrumentality-->artifact-->whole-->object-->physical entity->entity,
cut-->meat-->food-->solid-->matter-->physical entity-->entity,
apple-->edible fruit-->produce-->food-->solid-->matter-->physical entity-->entity},
   2.0)
({brush-->implement-->instrumentality-->artifact-->whole-->object-->physical entity->entity,
edible fruit-->produce-->food-->solid-->matter-->physical entity-->entity,
steak-->cut-->meat-->food-->solid-->matter-->physical entity-->entity},
   2.0)
({steak-->cut-->meat-->food-->solid-->matter-->physical entity-->entity,
apple-->edible fruit-->produce-->food-->solid-->matter-->physical entity-->entity,
implement-->instrumentality-->artifact-->whole-->object-->physical entity--> entity},
   2.0)
({apple-->edible fruit-->fruit-->reproductive structure-->plant organ-->plant part-->natural object-->whole-->object-->physical entity-->entity,
meat-->food-->solid-->matter-->physical entity-->entity,
toothbrush-->brush-->implement-->instrumentality-->artifact-->whole-->object--> physical entity-->entity},
   2.5)
({apple-->edible fruit-->fruit-->reproductive structure-->plant organ-->plant part-->natural object-->whole-->object-->physical entity-->entity,
steak-->dinner-->meal-->entity,
toiletry-->instrumentality-->artifact-->whole-->object-->physical entity-->entity},
   2.5)
({brush-->implement-->instrumentality-->artifact-->whole-->object-->physical entity->entity,
apple-->edible fruit-->produce-->food-->solid-->matter-->physical entity-->entity,
dinner-->meal-->entity},
   2.5)

Many more will also be provided. Eventually, since some concept of "apple" and some concept of "steak" are both narrower than "food-->solid-->matter-->physical entity-->entity" and in one embodiment a composite concept cannot have duplicate concepts, then we get:
({toiletry-->instrumentality-->artifact-->whole-->object-->physical entity-->entity,
food-->solid-->matter-->physical entity-->entity},
   7.5)
as well as many more. We might even see:
({edible fruit-->produce-->food-->solid-->matter-->physical entity-->entity,
cut-->meat-->food-->solid-->matter-->physical entity-->entity,
physical entity-->entity},
   8.5)
({brush-->implement-->instrumentality-->artifact-->whole-->object-->physical entity->entity,
solid-->matter-->physical entity-->entity,
entity},
   8.5)
But the best composite concept in a Category with the lower cost/weight was:
({toiletry-->instrumentality-->artifact-->whole-->object-->physical entity-->entity,
food-->solid-->matter-->physical entity-->entity},
   7.5)

The above would map to the category "grocery" in the mapping file 210.

Many optimizations are done, such as pruning the search tree when the score seen by continuing down a branch of the search is larger than the current minimum score so far. This is one reason that the cost for broadening is always assumed to be greater than 0, in one embodiment.

### Multiple Ambiguous Terms

If the user desires a "hammer" and a "wrench", then an input to the map's get function may be:
[
[hammer-->striker-->mechanical device-->mechanism-->device--> instrumentality-->artifact-->whole-->object-->physical entity-->entity,
hammer-->gunlock-->action-->mechanism-->device-->instrumentality-->artifact-->whole-->object-->physical entity-->entity,
hammer-->gunlock-->action-->gun-->weapon-->instrument-->device--> instrumentality-->artifact-->whole-->object-->physical entity-->entity,
...],
[wrench-->injury-->ill health-->pathological state-->physical condition--> condition-->state-->attribute-->abstraction-->entity,
wrench-->twist-->movement-->happening-->event-->psychological feature-->abstraction-->entity,
wrench-->hand tool-->tool-->implement-->instrumentality-->artifact-->whole-->object-->physical entity-->entity,
...]
]

The following composite concepts may be made from possible combinations of each of the input lists. The cost of using each one is calculated using the metric of choosing a different candidate in one of the input lists.
({wrench-->injury-->ill health-->pathological state-->physical condition--> condition->state-->attribute-->abstraction-->entity,
hammer-->striker-->mechanical device-->mechanism-->device--> instrumentality->artifact-->whole-->object-->physical entity-->entity},
0.0)
({hammer-->gunlock-->action-->mechanism-->device-->instrumentality--> artifact->whole-->object-->physical entity-->entity,
wrench-->injury-->ill health-->pathological state-->physical condition--> condition->state-->attribute-->abstraction-->entity},
0.013157894736842105)
({hammer-->gunlock-->action-->gun-->weapon-->instrument-->device--> instrumentality-->artifact-->whole-->object-->physical entity-->entity,
wrench-->injury-->ill health-->pathological state-->physical condition--> condition->state-->attribute-->abstraction-->entity},
0.02631578947368421)
({wrench-->injury-->ill health-->pathological state-->physical condition--> condition->state-->attribute-->abstraction-->entity,
hammer-->gunlock-->action-->gun-->weapon-->weaponry-->instrumentality--> artifact->whole-->object-->physical entity-->entity},
0.039473684210526314)
({hammer-->gunlock-->action-->keyboard-->device-->instrumentality-->artifact-->whole-->object-->physical entity-->entity,
wrench-->injury-->ill health-->pathological state-->physical condition--> condition->state-->attribute-->abstraction-->entity},
0.05263157894736842)
({hammer-->gunlock-->action-->keyboard-->piano-->keyboard instrument--> musical instrument-->device-->instrumentality-->artifact-->whole-->object--> physical entity->entity,
wrench-->injury-->ill health-->pathological state-->physical condition--> condition->state-->attribute-->abstraction-->entity},
0.06578947368421052)
({wrench-->injury-->ill health-->pathological state-->physical condition--> condition->state-->attribute-->abstraction-->entity,
hammer-->gunlock-->action-->keyboard-->piano-->stringed instrument--> musical instrument-->device-->instrumentality-->artifact-->whole-->object--> physical entity->entity},
0.07894736842105263)
({wrench-->injury-->ill health-->pathological state-->physical condition--> condition->state-->attribute-->abstraction-->entity,
hammer-->gunlock-->action-->keyboard-->piano-->percussion instrument--> musical instrument-->device-->instrumentality-->artifact-->whole-->object--> physical entity->entity},
0.09210526315789473)
({hammer-->gunlock-->action-->keyboard-->organ-->keyboard instrument--> musical instrument-->device-->instrumentality-->artifact-->whole-->object--> physical entity->entity,
wrench-->injury-->ill health-->pathological state-->physical condition--> condition->state-->attribute-->abstraction-->entity},
0.10526315789473684)
({hammer-->gunlock-->action-->keyboard-->organ-->wind instrument-->musical instrument-->device-->instrumentality-->artifact-->whole-->object-->physical entity->entity,
wrench-->injury-->ill health-->pathological state-->physical condition--> condition->state-->attribute-->abstraction-->entity},
0.11842105263157894)
({hammer-->gunlock-->action-->keyboard-->typewriter-->character printer--> printer->machine-->device-->instrumentality-->artifact-->whole-->object--> physical entity->entity,
wrench-->injury-->ill health-->pathological state-->physical condition--> condition->state-->attribute-->abstraction-->entity},
0.13157894736842105)
({hammer-->gunlock-->action-->keyboard-->computer-->machine-->device--> instrumentality-->artifact-->whole-->object-->physical entity-->entity,
wrench-->injury-->ill health-->pathological state-->physical condition--> condition->state-->attribute-->abstraction-->entity},
0.14473684210526316)
({wrench-->injury-->ill health-->pathological state-->physical condition--> condition->state-->attribute-->abstraction-->entity,
hammer-->gunlock-->action-->keyboard-->computer-->platform-->computer system->system-->instrumentality-->artifact-->whole-->object-->physical entity-->entity},
0.15789473684210525)
({hammer-->gunlock-->action-->keyboard-->terminal-->electronic equipment--> equipment-->instrumentality-->artifact-->whole-->object-->physical entity--> entity,
wrench-->injury-->ill health-->pathological state-->physical condition--> condition->state-->attribute-->abstraction-->entity},
0.17105263157894735)
({wrench-->injury-->ill health-->pathological state-->physical condition-->condition->state-->attribute-->abstraction-->entity,
hammer-->gunlock-->action-->keyboard-->typesetting machine-->printer--> machine->device-->instrumentality-->artifact-->whole-->object-->physical entity-->entity},
0.18421052631578944)
({wrench-->injury-->ill health-->pathological state-->physical condition--> condition->state-->attribute-->abstraction-->entity,
hammer-->gunlock-->gun-->weapon-->instrument-->device-->instrumentality--> artifact-->whole-->object-->physical entity-->entity},
0.19736842105263153)
({wrench-->injury-->ill health-->pathological state-->physical condition--> condition->state-->attribute-->abstraction-->entity,
hammer-->gunlock-->gun-->weapon-->weaponry-->instrumentality-->artifact--> whole->object-->physical entity-->entity},
0.21052631578947362)
({hammer-->hand tool-->tool-->implement-->instrumentality-->artifact-->whole--> object-->physical entity-->entity,
wrench-->injury-->ill health-->pathological state-->physical condition--> condition->state-->attribute-->abstraction-->entity},
0.2236842105263157)
({hammer-->malleus-->auditory ossicle-->ossicle-->bone-->connective tissue--> animal tissue-->tissue-->body part-->part-->thing-->physical entity-->entity,
wrench-->injury-->ill health-->pathological state-->physical condition--> condition->state-->attribute-->abstraction-->entity},
0.2368421052631578)
({hammer-->malleus-->auditory ossicle-->ossicle-->bone-->connective tissue--> animal tissue-->tissue-->body part-->part-->unit-->thing-->physical entity--> entity,
wrench-->injury-->ill health-->pathological state-->physical condition--> condition->state-->attribute-->abstraction-->entity},
0.2499999999999999)
({hammer-->malleus-->auditory ossicle-->ossicle-->bone-->connective tissue--> animal tissue-->tissue-->body part-->organism-->living thing-->whole-->object--> physical entity-->entity,
wrench-->injury-->ill health-->pathological state-->physical condition--> condition->state-->attribute-->abstraction-->entity},
0.263157894736842)
({wrench-->injury-->ill health-->pathological state-->physical condition--> condition->state-->attribute-->abstraction-->entity,
hammer-->malleus-->auditory ossicle-->ossicle-->bone-->endoskeleton--> skeletal system-->system-->body part-->part-->thing-->physical entity-->entity},
0.27631578947368407)
({wrench-->injury-->ill health-->pathological state-->physical condition-->condition->state-->attribute-->abstraction-->entity,
hammer-->malleus-->auditory ossicle-->ossicle-->bone-->endoskeleton--> skeletal system-->system-->body part-->part-->unit-->thing-->physical entity--> entity},
0.28947368421052616)
({hammer-->malleus-->auditory ossicle-->ossicle-->bone-->endoskeleton--> skeletal system-->system-->body part-->organism-->living thing-->whole--> object-->physical entity-->entity,
wrench-->injury-->ill health-->pathological state-->physical condition--> condition->state-->attribute-->abstraction-->entity},
0.30263157894736825)
({hammer-->malleus-->auditory ossicle-->ossicle-->bone-->endoskeleton--> skeletal system-->musculoskeletal system-->system-->body part-->part-->thing-->physical entity-->entity,
wrench-->injury-->ill health-->pathological state-->physical condition--> condition->state-->attribute-->abstraction-->entity},
0.31578947368421034)
({wrench-->injury-->ill health-->pathological state-->physical condition--> condition->state-->attribute-->abstraction-->entity,
hammer-->malleus-->auditory ossicle-->ossicle-->bone-->endoskeleton--> skeletal system-->musculoskeletal system-->system-->body part-->part-->unit--> thing->physical entity-->entity}, 0.32894736842105243)
({wrench-->twist-->movement-->happening-->event-->psychological feature->abstraction-->entity,
hammer-->striker-->mechanical device-->mechanism-->device-->instrumentality->artifact-->whole-->object-->physical entity-->entity},
0.3333333333333333)
({wrench-->injury-->ill health-->pathological state-->physical condition--> condition->state-->attribute-->abstraction-->entity,
hammer-->malleus-->auditory ossicle-->ossicle-->bone-->endoskeleton--> skeletal system-->musculoskeletal system-->system-->body part-->organism--> living thing->whole-->object-->physical entity-->entity},
0.3421052631578945)
({wrench-->twist-->movement-->happening-->event-->psychological feature--> abstraction-->entity,
hammer-->gunlock-->action-->mechanism-->device-->instrumentality-->artifact->whole-->object-->physical entity-->entity},
0.3464912280701754)
({wrench-->injury-->ill health-->pathological state-->physical condition--> condition->state-->attribute-->abstraction-->entity,
hammer-->malleus-->auditory ossicle-->ossicle-->bone-->endoskeleton--> skeletal system-->musculoskeletal system-->body-->natural object-->whole--> object-->physical entity-->entity},
0.3552631578947366)
({hammer-->gunlock-->action-->gun-->weapon-->instrument-->device--> instrumentality-->artifact-->whole-->object-->physical entity-->entity,
wrench-->twist-->movement-->happening-->event-->psychological feature--> abstraction-->entity},
0.35964912280701755)
({hammer-->malleus-->auditory ossicle-->ossicle-->middle ear-->cavity--> structure->body part-->part-->thing-->physical entity-->entity,
wrench-->injury-->ill health-->pathological state-->physical condition--> condition->state-->attribute-->abstraction-->entity},
0.3684210526315787)
({wrench-->twist-->movement-->happening-->event-->psychological feature--> abstraction-->entity,
hammer-->gunlock-->action-->gun-->weapon-->weaponry-->instrumentality--> artifact->whole-->object-->physical entity-->entity},
0.37280701754385964)
({wrench-->injury-->ill health-->pathological state-->physical condition--> condition->state-->attribute-->abstraction-->entity,
hammer-->malleus-->auditory ossicle-->ossicle-->middle ear-->cavity--> structure->body part-->part-->unit-->thing-->physical entity-->entity},
0.3815789473684208)
({wrench-->twist-->movement-->happening-->event-->psychological feature--> abstraction-->entity,
hammer-->gunlock-->action-->keyboard-->device-->instrumentality-->artifact--> whole->object-->physical entity-->entity},
0.38596491228070173)
({hammer-->malleus-->auditory ossicle-->ossicle-->middle ear-->cavity--> structure->body part-->organism-->living thing-->whole-->object-->physical entity-->entity,
wrench-->injury-->ill health-->pathological state-->physical condition--> condition->state-->attribute-->abstraction-->entity},
0.3947368421052629)
({hammer-->gunlock-->action-->keyboard-->piano-->keyboard instrument--> musical instrument-->device-->instrumentality-->artifact-->whole-->object--> physical entity->entity,
wrench-->twist-->movement-->happening-->event-->psychological feature--> abstraction-->entity},
0.3991228070175438)
({wrench-->hand tool-->tool-->implement-->instrumentality-->artifact-->whole--> object->physical entity-->entity,
hammer-->striker-->mechanical device-->mechanism-->device--> instrumentality->artifact-->whole-->object-->physical entity-->entity},
0.6666666666666666)
({wrench-->injury-->ill health-->pathological state-->physical condition--> condition->state-->attribute-->abstraction-->entity,
hammer-->mallet-->percussion instrument-->musical instrument-->device--> instrumentality-->artifact-->whole-->object-->physical entity-->entity},
0.6710526315789475)
({wrench-->twist-->movement-->happening-->event-->psychological feature--> abstraction-->entity,
hammer-->malleus-->auditory ossicle-->ossicle-->bone-->endoskeleton--> skeletal system-->musculoskeletal system-->system-->body part-->organism--> living thing->whole-->object-->physical entity-->entity},
0.6754385964912278)
({wrench-->hand tool-->tool-->implement-->instrumentality-->artifact-->whole--> object->physical entity-->entity,
hammer-->gunlock-->action-->mechanism-->device-->instrumentality-->artifact->whole-->object-->physical entity-->entity},
0.6798245614035088)
({hammer-->sports equipment-->equipment-->instrumentality-->artifact-->whole->object-->physical entity-->entity,
wrench-->injury-->ill health-->pathological state-->physical condition--> condition->state-->attribute-->abstraction-->entity},
0.6842105263157896)
({wrench-->twist-->movement-->happening-->event-->psychological feature--> abstraction-->entity,
hammer-->malleus-->auditory ossicle-->ossicle-->bone-->endoskeleton--> skeletal system-->musculoskeletal system-->body-->natural object-->whole--> object-->physical entity-->entity},
0.68859649122807)
({wrench-->hand tool-->tool-->implement-->instrumentality-->artifact-->whole--> object->physical entity-->entity,
hammer-->gunlock-->action-->gun-->weapon-->instrument-->device--> instrumentality-->artifact-->whole-->object-->physical entity-->entity},
0.6929824561403508)
({wrench-->injury-->ill health-->pathological state-->physical condition--> condition->state-->attribute-->abstraction-->entity,
hammer-->striker-->mechanical device-->mechanism-->device--> instrumentality->artifact-->whole-->object-->physical entity-->entity},
0.6973684210526317)
({hand tool-->tool-->implement-->instrumentality-->artifact-->whole-->object--> physical entity-->entity,
gunlock-->action-->keyboard-->typesetting machine-->printer-->machine--> device->instrumentality-->artifact-->whole-->object-->physical entity-->entity},
2.8508771929824563)
({wrench-->hand tool-->tool-->implement-->instrumentality-->artifact-->whole--> object->physical entity-->entity,
action-->keyboard-->typesetting machine-->printer-->machine-->device--> instrumentality-->artifact-->whole-->object-->physical entity-->entity},
2.8508771929824563)

Eventually it is found that the best composite concept for one of the categories 302 according to the scoring operations is:
({hand tool-->tool-->implement-->instrumentality-->artifact-->whole-->object--> physical entity-->entity},
2.8903508771929824)

As the scoring operations iterate through composite concepts in order of increasing cost, they must keep checking other composite concepts in case they have the same score as the best composite concept so far. Eventually the result is:
({wrench-->hand tool-->tool-->implement-->instrumentality-->artifact-->whole--> object->physical entity-->entity,
tool-->implement-->instrumentality-->artifact-->whole-->object-->physical entity->entity},
2.8903508771929824)

### Eventually nothing else has a lower cost than the current best.

The above scoring examples are merely exemplary and are not meant to limit the scope of the claimed subject matter described herein. In some embodiments, the concept mapper 270 may include additional scoring operations that may be selected by a particular application. In other embodiments, additional scoring operations may be implemented as desired to find the optimal matching category.

### Composite Concepts - Alternative Embodiment

The concept map (e.g. in the mapping file 210) internally keeps track of two low-level maps:
1: Composite Concept: Set of Categories
2: Concept: Set of Categories

There are two operations that the concept map (e.g. in the mapping file 210) permits (i.e. "Put" and "Get"):

### Put

One embodiment of the operations is:
input: composite concept, category
for low-level map (1), add the category to the set of categories that the composite concept maps to.
if the composite concept has size > 1, then
for each concept in the composite concept,
in low-level map (2), add the category to the set of categories the concept maps to.

### Get

The following describes the general idea of the algorithm, of course, the implementation has many optimizations:
input: list of list of strings
   where each inner list is all of the ontology expansions for a particular entity and each string represent a concept (more information about the input is given in Concept Mapping#Scoring composite concepts
convert the input to a list of list of concepts
if the input size is > 1, then for each inner list,
   let C(i) be the categories that each concept in the inner list can map to according to low-level map (2). (Note that we also find categories for broader concepts and keep track of the cost of using a broader concept)
   intersection = C(1) ∩ C(2) n ... ∩ C(input size)
   if intersection ≠ Ø:
   use the concepts that yielded the categories in intersection to make candidates to look up. The candidates to look up and the cost for each candidate is now known. To get the final result, each candidate can be looked up in low-level map (1). Broadening is unnecessary since it was performed earlier.

If input size == 1 or nothing was found in low-level map (1) for the candidates, then each inner list can be looked up independently, i.e. each composite concept has size 1.

The result of looking up each inner list independently returns a set of categories for each inner list in the order the inner lists are given.

In another embodiment, if intersection == Ø, Dynamic Programming can be used to find the best subsets of {C(1), C(2), ..., C(input size)} with non-empty category intersections.

### Handling Other Languages and Dialects

### Possible Dialects

Examples of English dialect codes that can be supported by the method and system described herein are:
en-AU
en-CA
en-001 (this is "generic" English)
en-IN
en-NZ
en-ZA
en-GB
en-US

Other supported languages codes include:
af-ZA, id-ID, ms-MY, ca-ES, cs-CZ, de-DE,
es-AR, es-BO, es-CL, es-CO, es-CR, es-EC, es-US, es-SV, es-ES, es-GT, es-HN,
es-MX, es-NI, es-PA, es-PY, es-PE, es-PR, es-DO, es-UY, es-VE, eu-ES, fr-FR,
gl-ES, zu-ZA, is-IS, it-IT, hu-HU, nl-NL, nb-NO, pl-PL, pt-BR, pt-PT, ro-RO,
sk-SK, fi-FI, sv-SE, tr-TR, bg-BG, ru-RU, sr-RS, he-IL,
ar-IL, ar-JO, ar-AE, ar-BH, ar-SA, ar-KW, ar-OM, ar-PS, ar-QA, ar-LB, ar-EG,
ko-KR, cmn-Hans-CN, cmn-Hans-HK, cmn-Hant-TW, yue-Hant-HK, ja-JP, la

### Multiple Dialects

Multiple dialects can be specified using a particular syntax (e.g. "&&"). For example:
[en-CA && en-IN] pants-->bloomers-->underpants-->undergarment-->garment->clothing-->covering-->artifact-->whole-->object-->physical entity-->entity

### Broader Concepts with Dialects

To specify that a broader concept of a concept is also dialect-specific, there must be a dialect before the broader concept's term. For example:
[en-UK] pants-->[en-UK]bloomers-->underpants-->undergarment-->garment-->clothing-->covering-->artifact-->whole-->object-->physical entity-->entity

specifies that pants is specific to the UK and that bloomers is specific to the UK.

Having a broader concept be dialect-specific may be implemented because of the recursive nature of making a concept: it may be easier to implement it than to not implement it. Every concept, even broader ones, may be taken to be the dialect specified as the dialect parameter in the query.

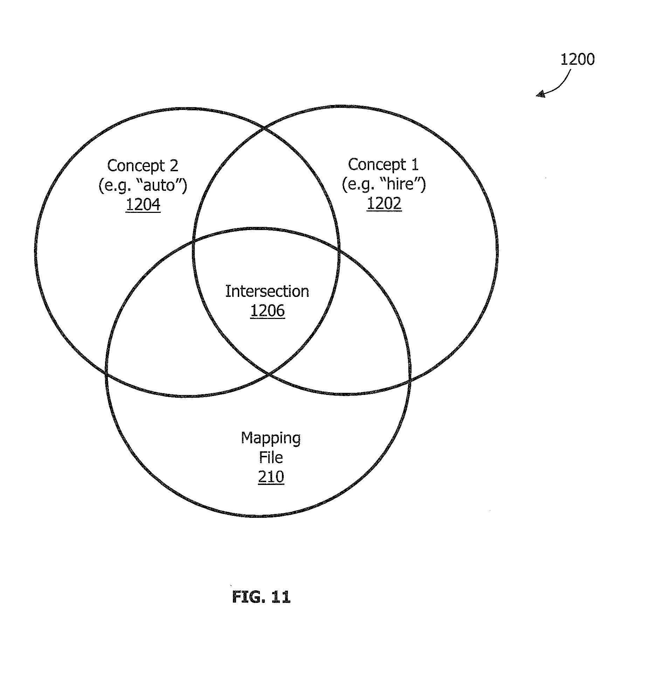

Figure 11 shows a Venn Diagram 1200 which conceptualizes an example mapping operation between a composite concept and a mapping file 210. A composite concept is a concept that includes more than one individual concept, for example, "hire" (concept 1 1202) and "auto" (concept 2 1204). An NLP engine 206 may receive a natural language query as user input 152 such as "I want to hire an auto in London". The NLP engine 206 may employ one or more mathematical models to derive the intention of the user from the text representation of the audio query (i.e. user input 152). In addition, the NLP engine 206 may employ additional models to extract relevant entities from the audio query (i.e. user input 152) such as "hire" (concept 1 1202) and "auto" (concept 2 1204). In various embodiments, the concept mapper 270 employs a mapping file 210 (which can be provided by database 215) which links categories 302 from third party external content services 118b (e.g. Yelp™, Bestbuy™, Walmart™, etc.) to concepts such as "hire" and "auto". The mapping file 210 may include a particular category 302 called "Car Rental" which may include various concepts such as "rent car", "rent a car", "rent an automobile", and so forth. In the case of user input 152 for "hire" (concept 1 1202) and "auto" (concept 2 1204), however, this particular concept may not be found in the mapping file 210. In various embodiments, the concept mapper 270 may expand the concepts extracted by the NLP engine 206 to find analogous and/or related terms to the entities extracted by the NLP engine 206. The concept mapper 270 may access various external content services 118b such as WordNet™, Yago™ and/or perform operations such as latent semantic analysis to construct a concept chain of subsumption and/or other relationships. The concept mapper 270 can employ one or more algorithms and/or heuristics to find an intersection 1206 between the elements of a composite concept (i.e. concept 1 1202 and concept 2 1204) and a mapping file 210. In performing concept expansion, it may be found that the word "hire" (concept 1 1202) is related to the word "rent", and that the word "auto" (concept 2 1204) is related to the word "car". Given that the mapping file 210 contains the composite concept "rent car" in a category 302 (perhaps of the same name), the intersection 1206 of the composite concepts with the mapping file 210 is the category 302 "rent car". The category 302 "rent car" is associated with a source (such as Yelp™) and may be used by another component of a software application, such as a content service 118, to interface with the appropriate source and find the information requested by the user input 152. In various embodiments, the third party data source (e.g. external content service 118b) allows a category 302 to be specified, allowing the user to find the requested information.

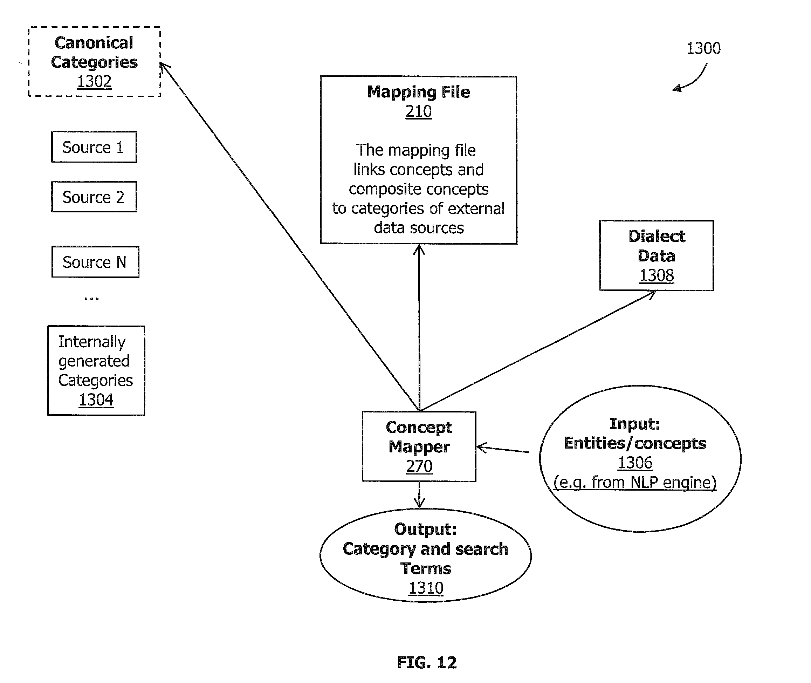

Reference is next made to Figure 12 to illustrate an embodiment 1300 of the concept mapping method and system described herein. A list of canonical categories 1302 (i.e. Source 1, Source 2.. Source N) are maintained in the system (e.g. in database 215), the canonical categories 1302 at least partly built using categories 302 provided by third party data sources such as external content services 118b. Third party data sources (e.g. external content services 118b) may include any third party data source that provides information and/or services and organizes data by categories. Such candidate third party data sources include Yelp™, Walmart™, Nextag™, and so forth. Another set of internally generated categories 1304 may be created and maintained to supplement the categories provided by third party data sources (e.g. external content services 118b). The internally generated categories 1304 may be created and maintained in several ways; for example, they may be automatically generated from open source datasets of synonyms, scraped from data sources such as Wikipedia™ or the Internet, manually generated by specialists, etc. The internally generated categories 1304 can be stored in the database 215. In one embodiment, the canonical categories 1302 including sources 1 - N and the internally generated categories 1304 are used when interfacing with third party APIs (e.g. of external content services 118b) in order to retrieve information or perform commands in accordance with user input 152. For example, in various embodiments, APIs of some external content services 118b may have categories 302 identical to some of the canonical categories 1302 used by the concept mapper 270, APIs of some external content services 118b may structure data according to different categories 302 than the canonical categories 1302 , and APIs of some external content services 118b may allow the canonical categories 1302 as search terms when searching for data. The canonical categories 1302 therefore provide useful information when interfacing with a variety of third party data sources (e.g. external content services 118b) that structure data in a variety of ways. When user input 152 is made to a software application 112 that includes the concept mapper 270 as a component, the concept mapper 270 may take entities and/or concepts as input 1306. In some embodiments, the entities/concepts input 1306 is provided by an NLP engine 206 which derives the intent of the user from the user input 152 and also extracts entities from the user input 152. The concept mapper 270 may access the canonical categories 1302, the mapping file 210, and/or dialect data 1308 (e.g. the language and/or dialect of the user) in order to form output 1310 that identifies one or more categories 302 best associated with the entities. The concept mapper 270 may use one or more of the techniques (algorithms, processes, operations, methods, heuristics, etc.) described herein to find the category 302 that best matches the concepts (including composite concepts) input 1306. In various embodiments, the dialect data 1308 comprises the language and/or dialect of the user and is used by the concept mapper 270 to determine which concepts are applicable to the user's particular dialect.

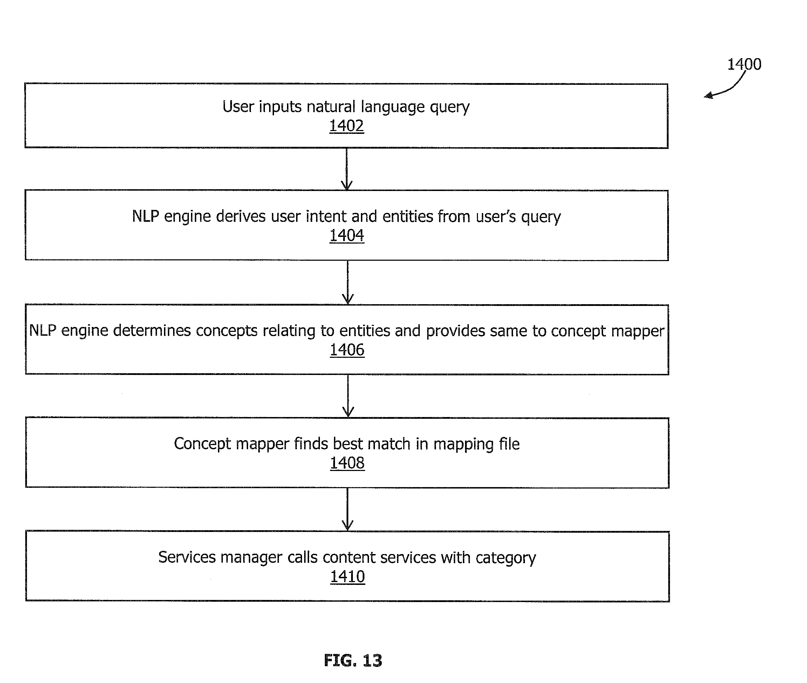

Reference is next made to Figure 13 to describe exemplary operations 1400 of mapping categories to concepts for the purpose of retrieving appropriate data from content services 118 according to the intention of the user expressed in user input 152 in the form of an audio query. At step 1402, an audio query such as "Find me some brown leather shoes for under $200" is inputted as user input 152. At step 1404, an NLP engine 206 derives the intent of the user from the user input 152 as relating to finding shopping items, and extracts the relevant entities such as "brown", "leather", "shoes", "under $200", all of which may be necessary to accomplish the intention of the user. At step 1406, the NLP engine 206 (or another component such as the concept mapper 270) may determine the concepts from the extracted entities. The concepts may include a hierarchy of subsumption relationships as described herein. Also, each entity may be associated with a large number of concepts after word/concept expansion is performed. At step 1408, the concept mapper 270 finds the best matching category in the mapping file 210 according to the processes described herein. Finally, at step 1410, a component such as a services manager 208 uses the best matching category to retrieve content from a content service 118.

Some portions of this description describe embodiments of the claimed subject matter in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations or processes described herein may be performed or implemented with one or more hardware or software modules, alone or in combination with other devices. In one embodiment, a software module is implemented with a computer program product comprising computer-readable medium containing computer program code, which can be executed by a computer processor for performing any or all of the steps, operations, or processes described.

Embodiments provided herein may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a tangible computer readable storage medium or any type of media suitable for storing electronic instructions, and coupled to a computer system bus. Furthermore, any computing systems referred to in the specification may include a single processor or may be architectures employing multiple processor designs for increased computing capability.

## Claims

1. A computer-implemented method for retrieving a result responsive to a command, the result retrieved from a content service, the content service comprising a second ontology comprising a hierarchy of at least one category and subcategories, the method comprising:
receiving an input query;
processing the input query to recognize a task to perform according to an intention and one or more entities determined from the input query;
identifying matching concepts in a first ontology using the one or more entities, the first ontology comprising hierarchical relationships of concepts;
using a mapping between the concepts of the first ontology and the at least one category of the second ontology to select a mapped category;
instructing the content service to retrieve the information according to the task and the mapped category; and
receiving the result from the content service.

2. The method of claim 1 wherein the mapping associates a category with each individual concept with which the category shares a lexical relationship.

3. The method of claim 1 or claim 2 wherein the mapping further associates categories with composite concepts, each composite concept defined by a set of individual concepts where the one or more entities match to a particular composite concept if all of the one or more entities match with the respective set of individual concepts.

4. The method of any one of claims 1 to 3 wherein using the mapping comprises performing scoring operations to select the mapped category.

5. The method of claim 4 comprising broadening a matched concept in accordance with the hierarchical relationship within the first ontology of the matched concept and scoring using the broadened matched concept.

6. The method of claim 4 or claim 5 wherein a particular entity is matched to two or more individual candidate matched concepts and wherein the mapping selects the mapped category using the two or more individual candidate matched concepts.

7. The method of any one of claims 4 to 6 wherein a plurality of entities are determined from the input query and wherein the method comprises:
matching each entity to at least one individual matched concept;
defining a plurality of composite concepts from combinations of each of the individual matched concepts, each composite concept comprising an individual matched concept for each of the plurality of entities;
broadening each of composite concept in accordance with the hierarchical relationship within the first ontology of each individual matched concept in a respective composite concept to define a plurality of broadened composite concepts;
scoring the composite concepts and each broadened composite concept; and
selecting the mapped category in accordance with the scoring.

8. The method of any one of claims 1 to 7 wherein the first ontology comprises a lexical ontology.

9. The method of any one of claims 1 to 8 wherein the first ontology consists of a larger vocabulary than the second ontology.

10. The method of any one of claims 1 to 9 wherein the processing comprises processing using a natural language processing system and the input query comprises an audio query or text-based query derived from an audio query.

11. A computer system for retrieving a result responsive to a command, the result retrieved from a content service, the content service comprising a second ontology comprising a hierarchy of at least one category and subcategories, the system comprising one or more processors coupled to memory storing instructions and data for configuring the computer system to perform a method according to any one of claims 1 to 10.

12. A non-transitory computer-readable medium for retrieving a result responsive to a command, the result retrieved from a content service, the content service comprising a second ontology comprising a hierarchy of at least one category and subcategories, the non-transitory computer-readable medium comprising instructions that, when executed, cause a computer to perform a method according to any one of claims 1 to 10.
